# EUROPEAN PATENT SPECIFICATION

(11) **EP 3 674 866 B1**
(45) Date of publication and mention of the grant of the patent: **22.05.2024**
(21) Application number: 18865586.4
(22) Date of filing: 09.10.2018
(51) Int. Cl.: G06F 3/0481, G06F 3/0482, G06F 3/0488, H04M 1/725

(54) **METHOD FOR PROCESSING NOTIFICATION, AND ELECTRONIC DEVICE**
VERFAHREN ZUR VERARBEITUNG VON MITTEILUNGEN UND ELEKTRONISCHE VORRICHTUNG
PROCÉDÉ DE TRAITEMENT DE NOTIFICATION, ET DISPOSITIF ÉLECTRONIQUE

(30) Priority: 09.10.2017 CN 201710931714
(43) Date of publication of application: 01.07.2020
(60) Divisional application: 24163520.0
(73) Proprietor: Huawei Technologies Co., Ltd., Longgang District Shenzhen, Guangdong 518129 (CN)
(72) Inventor: MAO, Yanyan, Shenzhen Guangdong 518129 (CN)
(74) Representative: Grünecker Patent- und Rechtsanwälte PartG mbB
(86) International application number: PCT/CN2018/109531
(87) International publication number: WO 2019/072178

(56) References cited:
- EP-A1- 2 154 873
- EP-A1- 2 849 042
- CN-A- 102 075 337
- CN-A- 103 248 757
- CN-A- 104 077 104
- CN-A- 105 930 043
- CN-A- 107 193 664
- US-A1- 2008 052 635

## Description

### TECHNICAL FIELD

This application relates to the field of electronic technologies, and in particular, to a notification handling method and an electronic device.

### BACKGROUND

With development of intelligent electronic devices such as mobile phones, electronic devices are having increasingly powerful functions, and more tasks can be executed on electronic devices.

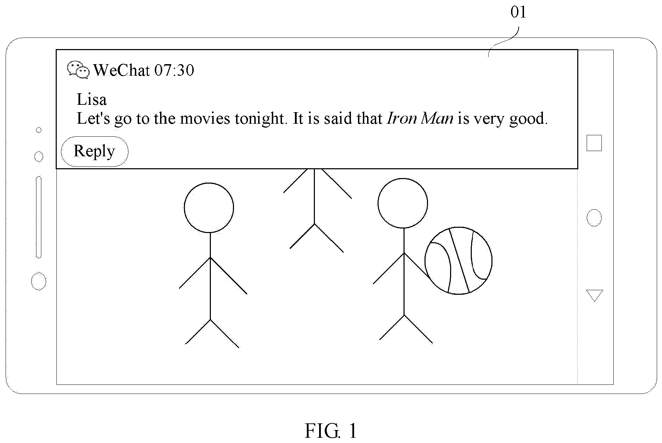

When an electronic device is executing a specific task and displaying a window of the current task, if the electronic device detects a notification generated by an application program, the electronic device may display the notification to alert a user. For example, referring to FIG. 1, when a user is watching a video, if an electronic device receives a WeChat message, the electronic device may display a banner notification 01 on a video screen, so that the user can learn of the WeChat message in time.
As shown in FIG. 1, the banner notification 01 displayed by the electronic device blocks a window of a current task of the user, causing relatively strong visual interference to the user, and leading to relatively poor user experience. EP2849042A1 discloses: receiving the notice information sent from the application program; displaying the notice information in a predetermined area. The predetermined area is an area displaying a status bar, or an area adjacent to the status bar, and the status bar is arranged along an edge of a display.
EP2154873A1 discloses when the notification of the electronic mail reception is received while receiving the television broadcast and the contents of the received electronic mail are browsed, the contents of the received electronic mail can be browsed by the easily and reliably executable user operation without obstructing the watching and listening of the television broadcast.

### SUMMARY

Embodiments of this application provide a notification handling method and an electronic device, to reduce visual interference of a notification to a user, and improve user experience.

To achieve the foregoing objective, the following technical solutions are used in the embodiments of this application:

According to an aspect, the technical solutions of this application provide a notification handling method, according to the claims.

In this way, by displaying the banner notification in the single-line form, an area of the electronic device for displaying the banner notification in the full-screen mode can be reduced, and visual interference of the banner notification to the user can be reduced, so that the user can be immersed in a window of a current task more intently, enjoyably, and smoothly.

In a possible implementation, the banner notification is a notification of an instant message; and the banner notification in the single-line form includes some or all information of the content of the notification, the icon of the application program that generates the banner notification, the name of the application program, and the topic of the banner notification; the detailed information includes all information of the content of the banner notification, the icon of the application program that generates the banner notification, the name of the application program, the time at which the banner notification is generated, and the topic of the banner notification; and the topic of the banner notification is a contact that sends the instant message.

In this way, the electronic device displays, by using the banner notification in the single-line form that occupies a relatively small area, the content of the notification, thereby helping the user make a decision based on specific content of the banner notification, for example, helping the user decide whether to reply to the banner notification, whether to ignore the banner notification, or whether to perform another operation.

In another possible implementation, the displaying detailed information about the banner notification in the first window in response to detection of a touch operation of a user on the banner notification in the single-line form includes: displaying, by the electronic device, the detailed information about the banner notification and an operation option in the first window in response to detection of the touch operation of the user on the banner notification in the single-line form, where the operation option is used for performing an operation on the banner notification.

In this solution, when the user finds, based on the content of the banner notification in the single-line form, that the user is more interested in the banner notification or the banner notification is more important, the user may perform the touch operation on the banner notification in the single-line form, so that the electronic device displays the detailed information about the banner notification, and the user can learn of more detailed information about the banner notification. Specifically, the electronic device may display the detailed information about the banner notification in the first window in the floating manner, or the electronic device may display a second window, where the second window may include the detailed information about the banner notification.

In another possible implementation, the operation option includes at least one of reply, call, delete, ignore, download, or play.

In this way, the electronic device may perform corresponding operations on the banner notification based on touch operations of the user on different operation options.

In another possible implementation, the banner notification in the single-line form further includes a first control, and the touch operation of the user on the banner notification in the single-line form is a tap operation on the first control on the banner notification in the single-line form, or an operation of sliding downward the banner notification in the single-line form.

In this way, the user taps the first control or slides downward the banner notification in the single-line form, so that the detailed information about the banner notification can be displayed in the first window.

In another possible implementation, the method further includes: displaying, by the electronic device in response to detection of a tap operation of the user on an area used for displaying the icon of the application program, the name of the application program, the time information, or the topic or a blank area in the banner notification in the single-line form, an application window of the application program that generates the banner notification.

In this way, the user can conveniently enter the application window of the application program from the banner notification in the single-line form.

In another possible implementation, the method further includes: deleting, by the electronic device, the banner notification in the single-line form in response to detection of an operation of sliding the banner notification in the single-line form to the left or the right that is performed by the user.

In this way, the user can conveniently delete the banner notification in the single-line form.

In another possible implementation, the method further includes: stopping, by the electronic device in response to detection of an operation of sliding upward the banner notification in the single-line form that is performed by the user, floating display of the banner notification in the first window; and displaying, by the electronic device, a status bar in response to an operation of the user for displaying the status bar, where the status bar includes an application icon in the banner notification.

In this way, the user can conveniently enter the status bar from the banner notification in the single-line form.

In another possible implementation, the method further includes: displaying, by the electronic device, a notification panel in response to an operation of sliding downward the detailed information that is performed by the user, where the notification panel includes the banner notification.

In this way, the user can conveniently enter the notification panel from the banner notification in the single-line form.

In this way, the electronic device can display the detailed information about the banner notification within the preset duration, so that the user views the notification information or performs an operation within the preset duration, and when display duration of the detailed information is longer than or equal to the preset duration, the electronic device can stop display of the detailed information, to restore display of the first window in full screen, thereby avoiding continuous visual interference of the notification to the user.

According to another aspect, the technical solutions of this application provide a notification handling method, including: displaying, by an electronic device, a first window in a full-screen mode; and displaying, by the electronic device if detecting a to-be-displayed banner notification, the banner notification in a single-line form in the first window in a floating manner, where the banner notification in the single-line form is located at the top or the bottom of the first window, and the banner notification in the single-line form includes some or all of information of content of the notification, and further includes at least one of an icon of an application program that generates the banner notification, a name of the application program, a time at which the banner notification is generated, or a topic of the banner notification; wherein the method further comprises: when display duration of the banner notification in the single-line form is longer than or equal to preset duration, stopping display of the banner notification in the single-line form in the first window; determining, by a electronic device, the size of the application window of the current task is not equal to a size of the display screen; displaying the banner notification in a plurality of lines..

In this way, by displaying the banner notification in the single-line form, an area of the electronic device for displaying the banner notification in the full-screen mode can be reduced, and visual interference of the banner notification to the user can be reduced, so that the user can be immersed in a window of a current task more intently, enjoyably, and smoothly.

According to another aspect, the technical solutions of this application provide an electronic device, including one or more processors and one or more memories. The one or more memories are coupled to the one or more processors. The one or more memories are configured to store computer program code, and the computer program code includes a computer instruction. When the one or more processors execute the computer instruction, the electronic device is enabled to perform the notification handling method according to any one of the possible implementations of any one of the foregoing aspects.

According to another aspect, the technical solutions of this application provide a computer storage medium, including a computer instruction. When the computer instruction is run on an electronic device, the electronic device is enabled to perform the notification handling method according to any one of the possible implementations of any one of the foregoing aspects.

According to another aspect, the technical solutions of this application provide a computer program product. When the computer program product is run on an electronic device, the electronic device is enabled to perform the notification handling method according to any one of the possible implementations of any one of the foregoing aspects.

### BRIEF DESCRIPTION OF DRAWINGS

FIG. 1 is a schematic diagram of display of a notification in the prior art;
FIG. 2A is a schematic diagram of a hardware structure of an electronic device according to an embodiment of this application;
FIG. 2B is a schematic diagram of a software structure of an electronic device according to an embodiment of this application;
FIG. 3 is a flowchart of a notification handling method according to an embodiment of this application;
FIG. 4 is a schematic diagram of display of a notification according to an embodiment of this application;
FIG. 5a is a schematic diagram of display of another notification according to an embodiment of this application;
FIG. 5b is a schematic diagram of display of another notification according to an embodiment of this application;
FIG. 6 is a schematic diagram of display of another notification according to an embodiment of this application;
FIG. 7 is a schematic diagram of display of another notification according to an embodiment of this application;
FIG. 8a is a schematic diagram of display of another notification according to an embodiment of this application;
FIG. 8b is a schematic diagram of display of another notification according to an embodiment of this application;
FIG. 8c is a schematic diagram of display of another notification according to an embodiment of this application;
FIG. 9a is a schematic diagram of display of another notification according to an embodiment of this application;
FIG. 9b is a schematic diagram of display of another notification according to an embodiment of this application;
FIG. 10 is a schematic diagram of display of another notification according to an embodiment of this application;
FIG. 11 is a schematic diagram of display of another notification according to an embodiment of this application;
FIG. 12A and FIG. 12B are a schematic diagram of display of one group of notifications according to an embodiment of this application;
FIG. 13A and FIG. 13B are a schematic diagram of display of another group of notifications according to an embodiment of this application;
FIG. 14 is a schematic diagram of display of another notification according to an embodiment of this application;
FIG. 15 is a schematic diagram of display of another notification according to an embodiment of this application;
FIG. 16 is a schematic diagram of display of another group of notifications according to an embodiment of this application;
FIG. 17 is a schematic diagram of display of another notification according to an embodiment of this application;
FIG. 18A and FIG. 18B are a schematic diagram of display of another group of notifications according to an embodiment of this application;
FIG. 19a is a schematic diagram of display of another notification according to an embodiment of this application;
FIG. 19b is a schematic diagram of display of another notification according to an embodiment of this application;
FIG. 19c is a schematic diagram of display of another notification according to an embodiment of this application;
FIG. 20 is a schematic diagram of display of another group of notifications according to an embodiment of this application;
FIG. 21 is a schematic diagram of display of another group of notifications according to an embodiment of this application;
FIG. 22A and FIG. 22B are a schematic diagram of display of another group of notifications according to an embodiment of this application;
FIG. 23 is a schematic diagram of display of another group of notifications according to an embodiment of this application;
FIG. 24 is a schematic diagram of display of another notification according to an embodiment of this application;
FIG. 25 is a schematic diagram of display of another notification according to an embodiment of this application;
FIG. 26 is a schematic diagram of display of another notification according to an embodiment of this application; and
FIG. 27 is a schematic structural diagram of another electronic device according to an embodiment of this application.

### DESCRIPTION OF EMBODIMENTS

The following describes the technical solutions in the embodiments of this application with reference to the accompanying drawings in the embodiments of this application. In the descriptions of the embodiments of this application, "/" means "or" unless otherwise stated. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of the embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise stated, "a plurality of" means two or more than two.

A notification handling method provided in embodiments of this application may be applied to electronic devices such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in the embodiments of this application.

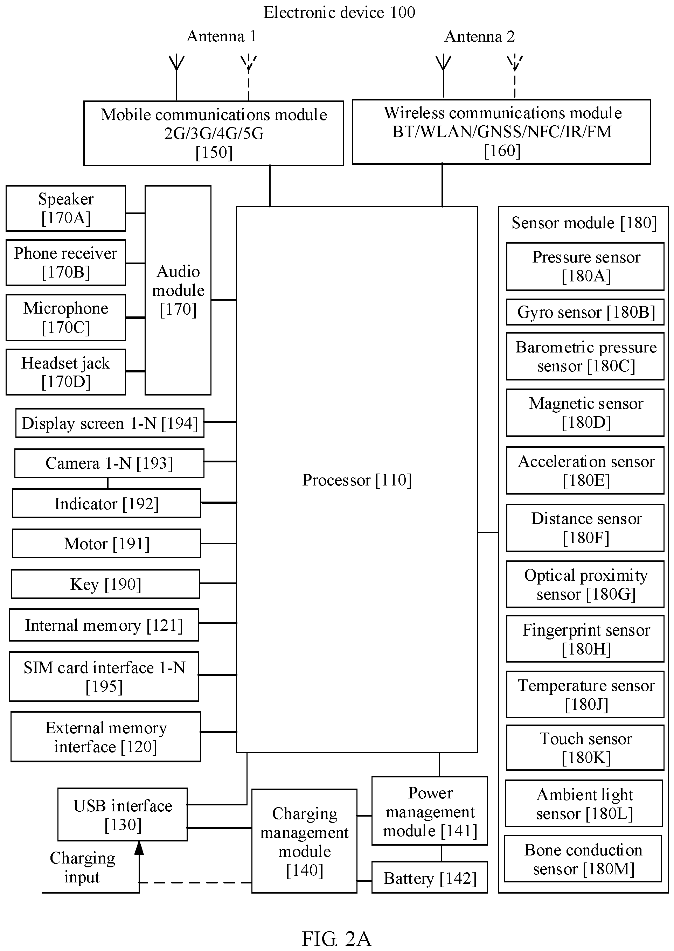

For example, FIG. 2A is a schematic structural diagram of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a timing signal, and read an instruction and control execution of the instruction.

The processor 110 may be further configured with a memory to store an instruction and data. In some embodiments, the memory in the processor 110 is a cache memory. The memory may store an instruction or data that is recently used or cyclically used by the processor 110. If the processor 110 needs to use the instruction or the data again, the processor 110 may directly invoke the instruction or the data from the memory, to avoid repeated access and reduce a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flash light, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communications module 160 by using the I2S interface, to implement a function of answering a call by using a Bluetooth headset.

The PCM interface may also be used for audio communication, and sampling, quantization, and encoding of an analog signal. In some embodiments, the audio module 170 may be coupled to the wireless communications module 160 by using the PCM interface. In some embodiments, the audio module 170 may alternatively transfer an audio signal to the wireless communications module 160 by using the PCM interface, to implement the function of answering a call by using a Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 by using the UART interface, to implement a Bluetooth function. In some embodiments, the audio module 170 may transfer an audio signal to the wireless communications module 160 by using the UART interface, to implement a function of playing music by using a Bluetooth headset.

The MIPI interface may be configured to connect the processor 110 to peripheral devices such as the display screen 194 and the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using the DSI interface, to implement a display function of the electronic device 100.

The GPIO interface may be configured by using software. The GPIO interface may be configured to transmit a control signal, or may be configured to transmit a data signal. In some embodiments, the GPIO interface may be configured to connect the processor 110 to the camera 193, the display screen 194, the wireless communications module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be used for data transmission between the electronic device 100 and a peripheral device, or may be configured to connect to a headset, to play audio by using the headset. The interface may alternatively be configured to connect to another electronic device such as an AR device.

It may be understood that an interface connection relationship between the modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charger, the charging management module 140 may receive charging input of a wired charger by using the USB interface 130. In some embodiments of a wireless charger, the charging management module 140 may receive wireless charging input by using a wireless charging coil of the electronic device 100. The charging management module 140 may charge the electronic device by using the power management module 141 while charging the battery 142.

The power management module 141 is configured to connect the battery 142 to the charging management module 140 and the processor 110. The power management module 141 receives input of the battery 142 and/or the charging management module 140, and supplies power for the processor 110, the internal memory 121, an external memory, the display screen 194, the camera 193, the wireless communications module 160, and the like. The power management module 141 may be further configured to monitor parameters such as a battery capacity, a battery cycle count, a state of battery health (an electric leakage or impedance). In some other embodiments, the power management module 141 may alternatively be configured in the processor 110. In some other embodiments, the power management module 141 and the charging management module 140 may alternatively be configured in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover a single communications frequency band or a plurality of communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution for wireless communication including 2G/3G/4G/5G and the like to be applied to the electronic device 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering or amplification on the received electromagnetic wave, and transfer the electromagnetic wave to the modem processor for demodulation. The mobile communications module 150 may further amplify a signal modulated by the modem processor, and convert the signal into an electromagnetic wave for radiation by using the antenna 1. In some embodiments, at least some function modules of the mobile communications module 150 may be configured in the processor 110. In some embodiments, at least some function modules of the mobile communications module 150 may be configured in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transfers the low-frequency baseband signal obtained through demodulation to the baseband processor for processing. The low-frequency baseband signal is processed by the baseband processor and is then transferred to the application processor. The application processor outputs a sound signal by using an audio device (not limited to the speaker 170A, the phone receiver 170B, or the like), or displays an image or a video by using the display screen 194.

In some embodiments, the modem processor may be an independent device. In some other embodiments, the modem processor may be independent of the processor 110, and be configured in a same device as the mobile communications module 150 or another function module.

The wireless communications module 160 can provide a solution for wireless communication including a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology and the like to be applied to the electronic device 100. The wireless communications module 160 may be one or more devices integrating at least one communications processor module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation by using the antenna 2.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs that execute a program instruction to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro-OLED, a quantum dot light emitting diode (quantum dot light emitting diode, QLED), or the like. In some embodiments, the electronic device 100 may include one or N display screens 194, where N is a positive integer greater than 1.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is opened, light is transferred to a camera photosensitive element by using a lens, an optical signal is converted into an electrical signal, and the electrical signal is transferred to the ISP for processing and is converted into an image that is visible to a naked eye. The ISP may further optimize an algorithm for noise, brightness, and complexion of the image. The ISP may further optimize parameters such as exposure and a color temperature of a photographing scene. In some embodiments, the ISP may be configured in the camera 193.

The camera 193 is configured to capture a static image or a video. An optical image is generated for an object by using the lens and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format such as RGB or YUV.

In some embodiments, the electronic device 100 may include one or N cameras 193, where N is a positive integer greater than 1.

The digital signal processor is configured to process a digital signal, and can further process another digital signal in addition to a digital image signal. For example, when the electronic device 100 performs frequency channel selection, the digital signal processor is configured to perform Fourier transformation and the like on frequency channel energy.

The video codec is configured to compress or decompress a digital video. The electronic device 100 can support one or more video codecs. In this way, the electronic device 100 can play or record videos in a plurality of encoding formats, for example, moving picture experts group (moving picture experts group, MPEG) 1, MPEG2, MPEG3, and MPEG4.

The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the electronic device 100, such as image recognition, facial recognition, speech recognition, and text understanding, can be implemented by using the NPU.

The external memory interface 120 may be configured to connect to an external storage card such as a micro SD card, to extend a storage capability of the electronic device 100. The external storage card communicates with the processor 110 by using the external memory interface 120, to implement a data storage function, for example, store files such as music and a video into the external storage card.

The internal memory 121 may be configured to store computer executable program code, where the executable program code includes an instruction. The processor 110 runs the instruction stored in the internal memory 121, to implement various function applications of the electronic device 100 and data processing. The internal memory 121 may include a program storage area and a data storage area. The program storage area may store an operating system, an application program required by at least one function (such as a sound playback function and an image display function), and the like. The data storage area may store data (such as audio data and an address book) created during use of the electronic device 100, and the like. In addition, the internal memory 121 may include a high-speed random access memory, and may further include a non-volatile memory, for example, at least one disk storage device, a flash memory device, or a universal flash storage (universal flash storage, UFS).

The electronic device 100 can implement an audio function, for example, music playback and recording, by using the audio module 170, the speaker 170A, the phone receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be configured in the processor 110, or some function modules of the audio module 170 are configured in the processor 110.

The speaker 170A, also referred to as a "horn", is configured to convert an audio electrical signal into a sound signal. Music can be listened to or a hands-free call can be answered by using the speaker 170A in the electronic device 100.

The phone receiver 170B, also referred to as an "earpiece", is configured to convert an audio electrical signal into a sound signal. When a call is answered or audio information is listened to by using the electronic device 100, the phone receiver 170B may be put close to a human ear to listen to a voice.

The microphone 170C, is configured to convert a sound signal into an electrical signal. When making a call or sending a voice message, a user can make a sound near the microphone 170C through the mouth of the user to input a sound signal to the microphone 170C. At least one microphone 170C may be configured in the electronic device 100. In some other embodiments, two microphones 170C may be configured in the electronic device 100, to collect a sound signal and further implement a noise reduction function. In some other embodiments, alternatively, three, four, or more microphones 170C may be configured in the electronic device 100, to collect a sound signal, reduce noise, and further identify a sound source, implement a directional recording function, and the like.

The headset jack 170D is configured to connect to a wired headset. The headset jack 170D may be a USB interface 130, or may be a 3.5-mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be configured on the display screen 194. There are many types of pressure sensors 180A, such as a resistive pressure sensor, an inductive pressure sensor, and a capacitive pressure sensor. The capacitive pressure sensor may be a parallel plate including at least two conductive materials. When a force is applied to the pressure sensor 180A, capacitance between electrodes changes. The electronic device 100 determines intensity of the pressure based on the change in the capacitance. When a touch operation is applied to the display screen 194, the electronic device 100 detects intensity of the touch operation by using the pressure sensor 180A. The electronic device 100 may also calculate a touch position based on a detection signal of the pressure sensor 180A.

In some embodiments, touch operations that are applied to a same touch position but have different touch operation intensity may correspond to different operation instructions. For example, when a touch operation with touch operation intensity less than a first pressure threshold is applied to an SMS message application icon, an instruction for viewing an SMS message is executed. When a touch operation with touch operation intensity greater than or equal to the first pressure threshold is applied to the SMS message application icon, an instruction for creating an SMS message is executed.

The gyro sensor 180B may be configured to determine a moving posture of the electronic device 100. In some embodiments, an angular velocity of the electronic device 100 around three axes (namely, x, y, and z axes) may be determined by using the gyro sensor 180B. The gyro sensor 180B may be used for image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, thereby implementing image stabilization. The gyro sensor 180B may also be used for navigation and a motion sensing game scene.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover based on the magnetic sensor 180D. Further, based on a detected opening or closing state of the leather case or a detected opening or closing state of the flip cover, a feature such as automatic unlocking of the flip cover is set.

The acceleration sensor 180E can detect a magnitude of accelerations of the electronic device 100 in various directions (generally on three axes), can detect a magnitude and a direction of gravity when the electronic device 100 is static, and may be further configured to recognize an attitude of the electronic device, and be applied to switching between landscape orientation and portrait orientation, a pedometer, or another application.

The distance sensor 180F is configured to measure a distance. The electronic device 100 may measure the distance by using infrared or laser. In some embodiments, in a photographing scene, the electronic device 100 may use the distance sensor 180F to measure a distance to implement fast focusing.

The optical proximity sensor 180G may include, for example, a light emitting diode (LED) and an optical detector. The light emitting diode may be an infrared light emitting diode. The electronic device 100 emits infrared light by using the light emitting diode. The electronic device 100 uses a photodiode to detect infrared reflected light from an object nearby. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically turn off the screen for power saving. The optical proximity sensor 180G may also be used in a smart cover mode or a pocket mode to automatically unlock or lock the screen.

The ambient light sensor 180L is configured to sense ambient light brightness. The electronic device 100 may adaptively adjust brightness of the display screen 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket to prevent a false touch.

The fingerprint sensor 180H is configured to collect a fingerprint. The electronic device 100 may use a feature of the collected fingerprint to implement fingerprint-based unlocking, accessing an application lock, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is below another threshold, the electronic device 100 heats the battery 142 to prevent the low temperature from causing the electronic device 100 to shut down abnormally. In some other embodiments, when the temperature is below still another threshold, the electronic device 100 boosts an output voltage of the battery 142 to prevent abnormal shutdown caused by the low temperature.

The touch sensor 180K is also referred to as a "touch panel". The touch sensor 180K may be disposed on the display screen 194, and the touch sensor 180K and the display screen 194 form a touchscreen. The touch sensor 180K is configured to detect a touch operation on or near the touch sensor 180K. The touch sensor may transfer the detected touch operation to the application processor to determine a type of the touch event, and provide visual output related to the touch operation by using the display screen 194. In some other embodiments, the touch sensor 180K may be disposed on a surface of the electronic device 100 at a position different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may also contact a human body pulse to receive a blood pressure beating signal. In some embodiments, the bone conduction sensor 180M may be disposed in a headset, to combine into a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive key input, generate key signal input related to a user setting and function control of the electronic device 100.

The motor 191 may generate a vibration alert. The motor 191 may be used for an incoming call vibration alert and a touch vibration feedback. For example, touch operations applied to different applications (for example, photographing and audio playback) may correspond to different vibration feedback effects. The motor 191 may also correspond to different vibration feedback effects for touch operations applied to different areas of the display screen 194. Different application scenarios (for example, a time reminder, information receiving, an alarm clock, and a game) may also correspond to different vibration feedback effects. Customization of a touch vibration feedback effect may also be supported.

The indicator 192 may be an indicator light and may be configured to indicate a charging state and a power change, and may also be configured to indicate a message, a missed call, a notification, and the like.

The SIM card interface 195 is configured to connect to a SIM card. The SIM card may be inserted into the SIM card interface 195 or plugged from the SIM card interface 195 to come into contact with or be separated from the electronic device 100. The electronic device 100 may support one or N SIM card interfaces, where N is a positive integer greater than 1. The SIM card interface 195 can support a nano SIM card, a micro SIM card, a SIM card, and the like. A plurality of cards may be inserted into the same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network by using the SIM card, to implement a call function, a data communication function, and the like. In some embodiments, the electronic device 100 uses an eSIM, namely, an embedded SIM card. The eSIM card may be embedded in the electronic device 100 and cannot be separated from the electronic device 100.

A software system of the electronic device 100 may use a layered architecture, an event driven architecture, a micro core architecture, a micro service architecture, or a cloud architecture. In this embodiment of this application, an Android system of a layered architecture is used as an example to illustrate a software structure of the electronic device 100.

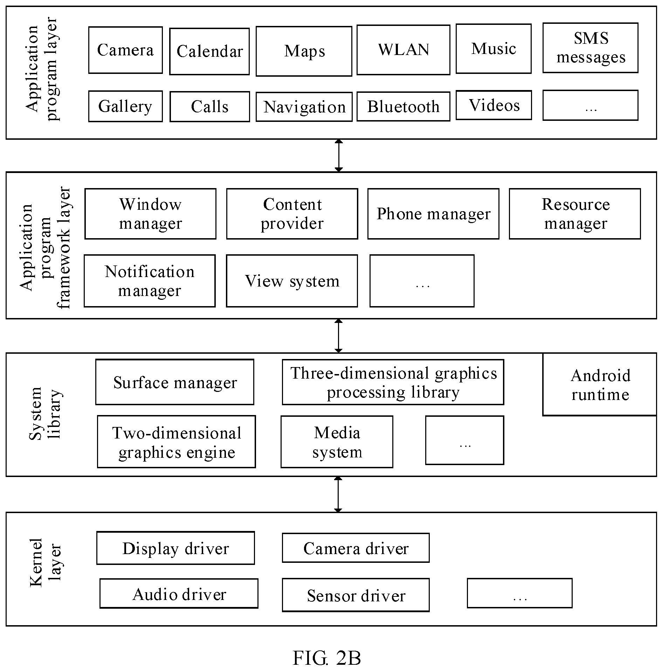

FIG. 2B is a schematic diagram of a software structure of an electronic device 100 according to an embodiment of this application. In the layered architecture, software is divided into a plurality oflayers, and each layer has a clear role and task. The layers communicate with each other by using a software interface. In some embodiments, the Android system is divided into four layers, namely, an application program layer, an application program framework layer, an Android runtime (Android runtime) and a system library, and a kernel layer from top to bottom. The application program layer may include a series of application program packages.

As shown in FIG. 2B, the application program package may include application programs such as camera, gallery, calendar, calls, maps, navigation, WLAN, Bluetooth, music, videos, and SMS messages.

The application program framework layer provides an application programming interface (application programming interface, API) and a programming framework for an application program at the application program layer. The application program framework layer includes some predefined functions.

As shown in FIG. 2B, the application program framework layer may include a window manager, a content provider, a view system, a phone manager, a resource manager, a notification manager, and the like.

The window manager is configured to manage a window program. The window manager may obtain a size of a display screen, determine whether there is a status bar, lock the screen, take a screenshot, and the like.

The content provider is configured to store and obtain data and make the data accessible to an application program. The data may include a video, an image, an audio, calls made and answered, a browse history, a bookmark, an address book, and the like.

The view system includes visual controls such as a control for displaying a text and a control for display an image. The view system may be configured to construct an application program. A display interface may include one or more views. For example, a display interface including an SMS message notification icon may include a text display view and an image display view.

The phone manager is configured to provide a communication function of the electronic device 100, for example, management of a call status (including answering or declining).

The resource manager provides various resources such as a localized character string, an icon, an image, a layout file, and a video file for an application program.

The notification manager enables an application program to display notification information in the status bar that may be used to convey a message of a notification type, where the message may disappear automatically after a short stay without user interaction. For example, the notification manager is configured to notify a user of download completion or remind a user of a message. The notification manager may alternatively display a notification in a form of a chart or a scroll bar text in a status bar at the top of the system, for example, a notification of an application program run in the background, or may display a notification in a form of a dialog window on the screen. For example, text information is alerted for in the status bar, an announcement is produced, the electronic device vibrates, or the indicator light blinks.

The Android runtime includes a core library and a virtual machine. The Android runtime is responsible for scheduling and management of the Android system.

The core library includes two parts: one is a function that needs to be called by a java language, and the other is a core library of Android.

The application program layer and the application program framework layer are run in the virtual machine. The virtual machine executes java files of the application program layer and the application program framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, and static image files. The media library can support a plurality of audio and video encoding formats such as MPEG4, H.264, MP3, AAC, AMR, JPG, and PNG

The three-dimensional graphics processing library is configured to implement drawing of three-dimensional graphics, image rendering, synthesis, layer processing, and the like.

The 2D graphics engine is a drawing engine for 2D graphics.

The kernel layer is a layer between hardware and software. The kernel layer includes at least a display driver, a camera driver, an audio driver, and a sensor driver.

Herein, with reference to a scenario of notification message processing, Android is used as an example to illustrate working procedures of the software and the hardware of the electronic device 100.

When a software provider needs to send a notification message to a user, a server of the software provider sends the notification message and an identifier of a to-be-notified-to electronic device of the user to an Android notification server (the notification server may be provided by Google or provided by a manufacturer of the electronic device). The notification server sends the notification message to the to-be-notified-to electronic device. The notification manager of the electronic device displays the notification message for notification by using the display screen 194 based on a current setting of the electronic device, audibly notifies the user of the notification message by using the speaker 170A in the audio module 170, performs vibration for reminding the user of the notification message by using the motor 191, or the like.

In a scenario of notification message display, the mobile communications module 150 of the electronic device may receive a notification message, and the notification manager of the electronic device may display the notification message for notification by using the display screen 194 based on a current setting of the electronic device.

An example in which a mobile phone having the structure shown in FIG 2A and FIG. 2B is the electronic device 100 is used to describe a notification handling method provided in an embodiment of this application in detail below.

When the electronic device is executing a specific task and displaying a window of a current service, if an application program in the electronic device generates a notification, the electronic device may display the notification on a window of the current task, causing visual interference to the current task of a user. The application program in the electronic device may include a system application program and a third-party application program. That an application program in the electronic device generates a notification may be that the application program locally generates the notification (for example, a notification for a low battery level). Alternatively, the notification generated by the application program in the electronic device may be a notification generated by the application program after the application program receives related information from another device by using the electronic device. For example, another electronic device sends a WeChat message to a WeChat application server, the WeChat application server sends the WeChat message to the notification server (for example, a server provided by a manufacturer of an operating system of the current electronic device) of the current electronic device, and the notification server sends the WeChat message to the current electronic device to generate a notification. The current electronic device may display the generated notification by using a software module such as the notification manager.

Particularly, when the user is watching a video, having a video chat, playing a game, or executing a task such as reading, the user often expects to be immersed in the task and try not to be disturbed. In this scenario, if a notification needs to be displayed, the electronic device may display the notification in a simple style. The notification in the simple style occupies a smaller display area and can minimize visual interference caused by the notification to the user. The notification herein may include a banner notification (banner notification), an alarm clock notification, an incoming call notification, or the like. An element in the notification may include one or more of an icon of the application program that generates the notification, a name of the application program, a time at which the notification is generated, a topic of the notification, or content (content) of the notification. The topic of the notification may be a title of the content of the notification; or when the notification is an instant message, the topic of the notification may be a contact that sends the instant message or the like.

When the user expects to be immersed in a specific task, the task is usually executed in a full-screen mode. In other words, if the electronic device executes a specific task in a full-screen mode, it may indicate that the user expects to be immersed in the current task. Therefore, in some embodiments, when the electronic device executes a specific task in the full-screen mode, the notification may be displayed in the simple style to reduce the display area occupied by the notification, and minimize the visual interference of the notification to the user.

The full-screen mode means that an application window of the current task occupies an entire display screen. Specifically, the electronic device may determine a size of the application window of the current task, and then determine whether the size of the application window of the current task is equal to a size of the display screen; and if the size of the application window of the current task is equal to the size of the display screen, the electronic device may determine that it is currently in the full-screen mode. In the full-screen mode, the user may call a navigation bar and a status bar through a sliding operation or the like, and the navigation bar and the status bar may be displayed on the application window of the current task in a floating manner. The navigation bar may include a back (back) key icon, a home screen key icon, a forward key icon, and the like.

In some other embodiments, if an application program used by the electronic device in the foreground is a target application program that is preset by the system or set that is performed by the user, the electronic device may display the notification in the simple style. When the user executes a task by using these target application programs, the user often expects not to be interrupted. For example, these preset target application programs may be a video player, a reader, game software, and the like.

An example in which the electronic device displays a banner notification in a simple style in the full-screen mode is used below for description.

When a first window of the current task is displayed in a full screen, if the electronic device detects a to-be-displayed banner notification, the electronic device may display the banner notification in the first window in a simple style and in a floating manner. The to-be-displayed banner notification may be a banner notification received by the electronic device from another device, or may be a banner notification generated by the application program of the electronic device.

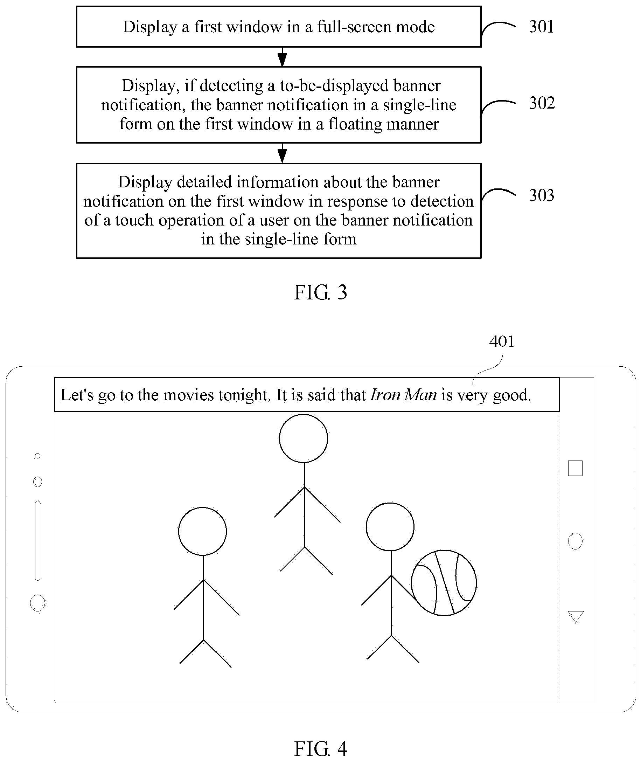

In some embodiments, the banner notification in the simple style may be a single-line banner notification. To be specific, in the full-screen mode, the electronic device displays the banner notification in a single-line form in the floating manner. The banner notification in the single-line form may also be referred to as a banner notification in a single-strip form. Referring to FIG. 3, the notification handling method may include the following steps:
301. The electronic device displays a first window in a full-screen mode.
302. The electronic device displays, if detecting a to-be-displayed banner notification, the banner notification in a single-line form in the first window in a floating manner.

Specifically, when the electronic device displays the first window in the full-screen mode, if the electronic device detects the to-be-displayed banner notification, the electronic device displays the banner notification in one line in the first window, instead of displaying the banner notification in a plurality of lines. Compared with the prior art shown in FIG. 1 in which an element in a banner notification is displayed in plurality of lines, a width of the banner notification is substantially the same as a width of a first window, and the banner notification occupies a relatively large display area, displaying the banner notification in the single-line form helps reduce an area for displaying the banner notification by the electronic device in the full-screen mode, so that visual interference of the banner notification to a user can be reduced, and the user can be immersed in a window of a current task more intently, enjoyably, and smoothly.

The banner notification in the single-line form may include one or more elements of an icon of an application program that generates the banner notification, a name of the application program, a time at which the banner notification is generated, a topic of the banner notification, or content (content) of the banner notification.

In some embodiments, the single-line banner notification includes some or all of information of the element, namely, the content (content) of the notification. In this way, the electronic device displays, by using the banner notification in the single-line form that occupies a relatively small area, the content of the notification, thereby helping the user make a decision based on specific content of the banner notification, for example, helping the user decide whether to reply to the banner notification, whether to ignore the banner notification, or whether to perform another operation.

Specifically, when an information amount of the content of the banner notification is relatively small, the electronic device may display all information of the content in one line; and when an information amount of the content of the banner notification is relatively large, and all of the content of the notification cannot be displayed in one line, the electronic device may display some information of the content of the notification in one line, to help the user generally understand and predict main content of the banner notification, thereby helping the user make a decision to determine whether to perform an operation such as replying.

For example, the banner notification in the single-line form may include only some or all of information in the element, namely, the content of the banner notification. For example, referring to FIG. 4, a banner notification 401 is a WeChat message notification, and all of information of content of the banner notification 401 is "Let's go to the movies tonight. It is said that *Iron Man* is very good."

In some other embodiments, the banner notification in the single-line form may include another element in addition to the element, namely, the content of the notification. To be specific, the banner notification in the single-line form may include, in addition to some or all information of the content of the notification, at least one of the icon of the application program that generates the banner notification, the name of the application program, the time at which the banner notification is generated, or the topic of the banner notification. When a plurality of elements are included in the banner notification in the single-line form, the electronic device may display, in one line, some or all information of the element, namely, the content of the notification, and another element included in the banner notification the single-line form.

For example, the banner notification in the single-line form includes some or all information of the content of the banner notification, the topic of the banner notification, and the icon and/or the name of the application program that generates the banner notification. In this way, the user can conveniently make a decision based on the content of the notification, and the user can further learn of the icon and/or the name of the application program that generates the banner notification.

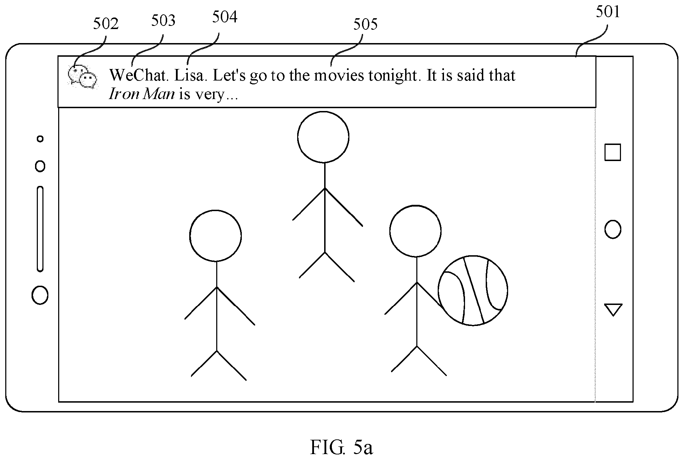

For example, referring to FIG. 5a, a banner notification 501 is a WeChat message notification, an icon 502 of an application program that generates the banner notification 501 is a WeChat icon, a name 503 of the application program that generates the banner notification 501 is WeChat, a topic 504 of the banner notification 501 is a contact "Lisa" that sends the WeChat message notification, and some information of content 505 of the banner notification 501 is "Let's go to the movies tonight. It is said that *Iron Man* is very". "..." in the banner notification 501 indicates that all information of the content of the banner notification is not completely displayed, and only some information of the content of the banner notification 501 is displayed.

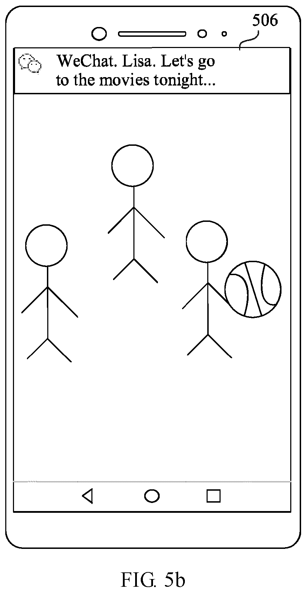

For another example, in FIG. 5a, a full-screen display state in a landscape mode is used as an example for description. In a full-screen display state in a portrait mode, referring to FIG. 5b, a banner notification 506 is a WeChat message notification, an icon of an application program that generates the banner notification 506 is a WeChat icon, a name of the application program that generates the banner notification 506 is WeChat, a topic of the banner notification 506 is a contact "Lisa" that sends the WeChat message notification, and some information of content of the banner notification 506 is "Let's go to the movies tonight."

For another example, the single-line banner notification includes the icon of the application program that generates the notification, the topic of the notification, and some or all information of the content of the notification. In this way, the user can conveniently make a decision based on the content of the notification, and can further learn of the icon of the application program that generates the banner notification and the topic of the notification.

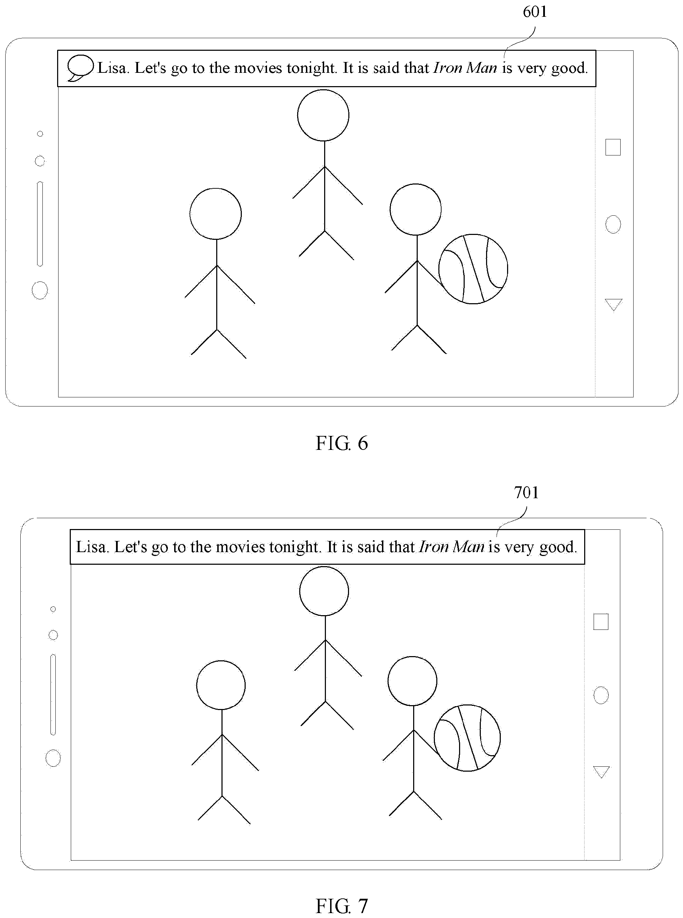

For example, referring to FIG. 6, a banner notification 601 is an SMS message notification, an icon of an application program that generates the banner notification 601 is an SMS message icon, a topic of the banner notification 601 is a contact "Lisa" that sends the SMS message notification, and all of information of content of the banner notification 601 is "Let's go to the movies tonight. It is said that *Iron Man* is very good."

For another example, the single-line banner notification includes the topic of the notification and some or all information of the content of the notification. In this way, the user can conveniently make a decision based on the content of the notification, and can further learn of the topic of the banner notification.

For example, referring to FIG. 7, a topic of a banner notification 701 is a contact "Lisa" that sends the WeChat message notification, and all of information of content of the banner notification 701 is "Let's go to the movies tonight. It is said that *Iron Man* is very good."

For another example, the banner notification in the single-line form includes the icon of the application program that generates the banner notification, the name of the application program, the time at which the banner notification is generated, the topic of the banner notification, and some or all information in the content of the banner notification. In this way, the user can conveniently make a decision based on the content of the notification, and can further learn of the icon of the application program that generates the banner notification, the name of the application program, the time at which the banner notification is generated, and the topic of the banner notification.

In some other embodiments, if types or priorities of banner notifications or application programs that generate banner notifications are different, elements in the banner notifications displayed by the electronic device in the single-line form may also be different. The electronic device may dynamically adjust the elements in the displayed banner notifications based on different banner notifications.

For example, if a type of a banner notification is a notification of an instant message, elements in the banner notification in the single-line form may include content of the notification, an icon of an application program that generates the notification, and a topic of the notification (namely, a contact that sends the instant message). For example, the instant message may be a WeChat message, an SMS message, a QQ message, or a Facebook message. If a type of a banner notification is a notification of a non-instant message, elements in the banner notification in the single-line form may include content of the notification and an icon of an application program that generates the notification.

For another example, a banner notification with a higher priority includes more elements, and a banner notification with a lower priority includes fewer elements. In this way, the user can learn of information about the more elements in the banner notification with the higher priority by using the banner notification in the single-line form.

For example, a notification generated by a preset application program has a relatively high priority. For another example, a banner notification of a message sent by a preset contact (such as a starred contact or an important contact) has a relatively high priority. For another example, a banner notification with notification content including a preset keyword (such as important or meeting) has a relatively high priority. For another example, a banner notification generated within a preset time period has a relatively high priority. For another example, banner notifications of an instant message and a system message (such as a reminder message for a lower battery level) that the user expects to instantly learn of have relatively high priorities.

In some embodiments, the banner notification in the single-line form may be displayed at a boundary position of the first window, to try not to block main content of the first window.

For example, as shown in FIG. 4 to FIG. 7, the banner notification in the single-line form may be displayed at the top of the first window.

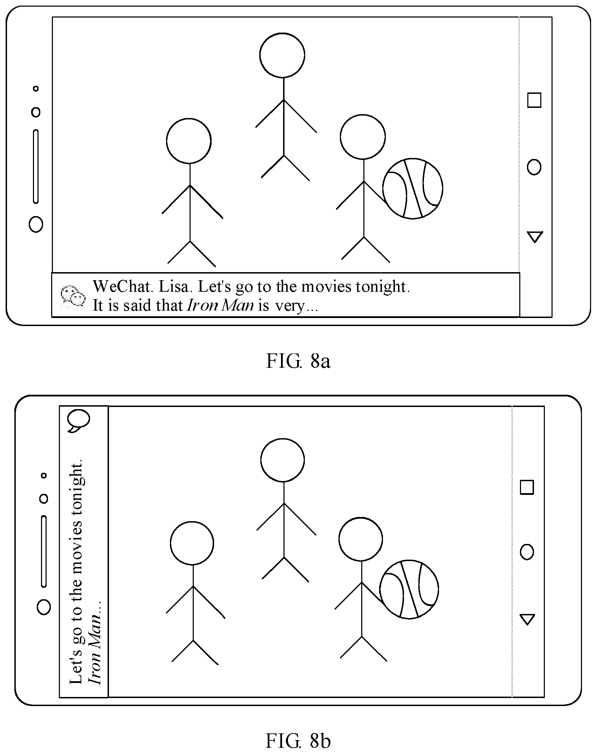

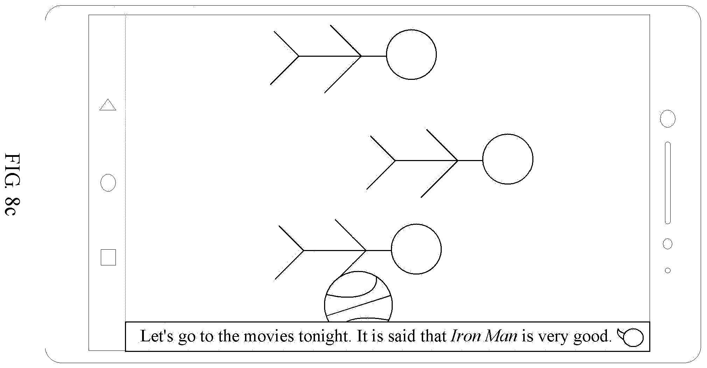

For another example, as shown in FIG. 8a, the banner notification in the single-line form may be displayed at the bottom of the first window; or as shown in FIG. 8b, the banner notification in the single-line form may be displayed on a left boundary of the first window and vertically extends; or as shown in FIG. 8c, the banner notification in the single-line form may be displayed on a right boundary of the first window and extends vertically. When the banner notification in the single-line form is located at the top or the bottom of the first window, it may also be referred to as that the electronic device displays the banner notification in a horizontal-line form. When the banner notification in the single-line form is located at the left boundary or the right boundary of the first window, it may also be referred to as that the electronic device displays the banner notifications in a vertical-line form.

If the first window corresponds to different application programs, display positions of the banner notification in the single-line form may also be different.

For example, when the first window is a video screen viewed that is performed by the user, because some subtitles may appear at the bottom of the first window, the banner notification in the single-line form may be displayed at a non-bottom position such as the top, the left side, or the right side, to avoid blocking display of the subtitles.

For another example, when the first window is a game interface of the user, because the user may need to call some game tools, menus, and the like on the left side or the right side of the first window, the banner notification in the single-line form may be displayed at the top or the bottom of the first window.

In some other embodiments, the element, namely, the content of the banner notification in the single-line form may be specific content information of the notification, or may be an abstract (or main content) of specific content information. Specifically, the electronic device may perform analysis and processing based on the specific content information of the notification, to obtain abstract information of the specific content. For example, the electronic device may obtain abstract information of the specific content information of the notification by using an extractive (extractive) or abstractive algorithm.

Because the abstract includes a relatively small amount of information, the electronic device can completely display the abstract in the banner notification in the single-line form as much as possible, so that the user can understand general content of the entire notification based on the small amount of abstract information that is viewed.

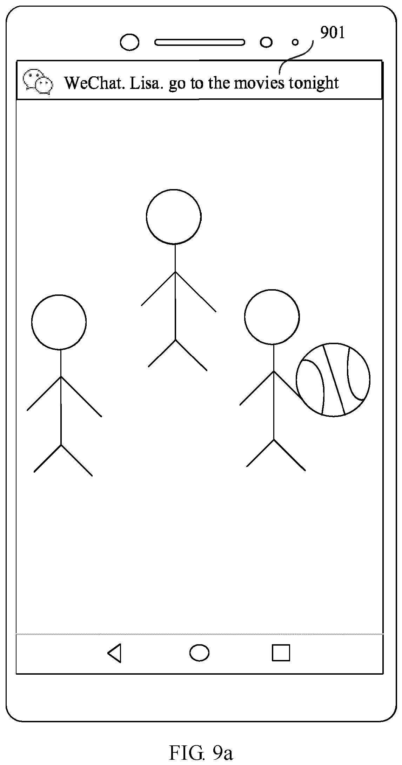

For example, referring to FIG. 9a, the element, namely, notification content 901 of the banner notification is specifically abstract information "go to the movies tonight" of specific content "Let's go to the movies tonight. It is said that *Iron Man* is very good" of the notification.

In some other embodiments, the element, namely, the content of the banner notification in the single-line form may be specific content information of the notification, or may be a keyword for specific content information. Specifically, the electronic device may perform analysis and processing based on the specific content information of the notification, to obtain the keyword for the specific content information. For example, the electronic device may obtain the keyword for the specific content information of the notification by using algorithms such as a term frequency-inverse document frequency (term frequency-inverse document frequency, TF-IDF) extraction method, a topic model (Topic-model) extraction method, and a rapid automatic keyword extraction (rapid automatic keyword extraction, RAKE) method.

Because a keyword includes a relatively small amount of information, the electronic device can display all keywords in the banner notification in the single-line form as much as possible, so that the user can understand general content of the entire notification based on a small amount of keyword information that is viewed.

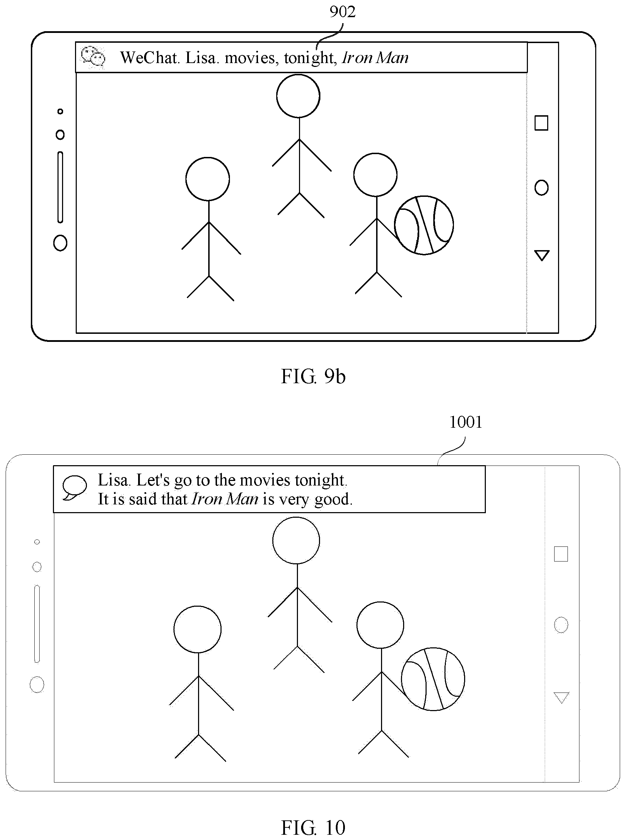

For example, referring to FIG. 9b, the element, namely, notification content 902 of the banner notification is specifically keywords "movies, tonight, *Iron Man"* for specific content "Let's go to the movies tonight. It is said that *Iron Man* is very good" of the notification.

In some embodiments, when the banner notification in the single-line form is located at the top or the bottom of the first window, a width of the banner notification in the single-line form is the same as a lateral width of the window. When the banner notification in the single-line form is located on the left side or the right side of the first window, a height of the banner notification in the single-line form is the same as a vertical height of the window. In this way, as much information as possible can be displayed in one line (a horizontal line or a vertical line) to help the user obtain more notification information with a smaller notification display area.

In some other embodiments, when the banner notification in the single-line form is located at the top or the bottom of the first window, a width of the banner notification in the single-line form may be less than a lateral width of the first window. The width of the banner notification in the single-line form may be fixed. Alternatively, the width of the banner notification in the single-line form may change with an information amount of the banner notification. A larger information amount of the banner notification indicates a greater width of the banner notification in the single-line form; or a smaller information amount of the banner notification indicates a smaller width of the banner notification in the single-line form.

For example, referring to FIG. 6, a width of the banner notification 601 is the same as the lateral width of the first window; and referring to FIG. 10, a width of a banner notification 1001 is less than the lateral width of the first window.

Similarly, when the banner notification in the single-line form is located at the left boundary or the right boundary of the first window, the height of the banner notification in the single-line form may be less than the vertical height of the first window. The height of the banner notification in the single-line form may be fixed. Alternatively, the height of the banner notification in the single-line form may change with an information amount of the banner notification. A larger information amount of the banner notification indicates a greater height of the banner notification in the single-line form; or a smaller information amount of the banner notification indicates a smaller height of the banner notification in the single-line form.

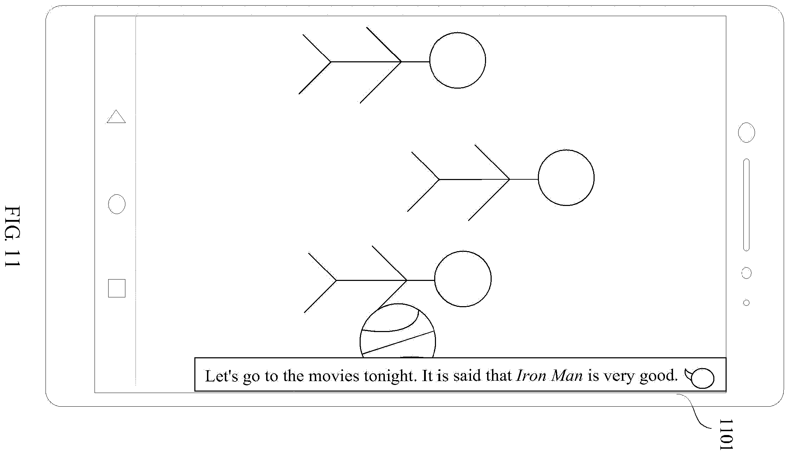

For example, referring to FIG. 8c, a height of the banner notification is the same as the vertical height of the first window; and referring to FIG. 11, a height of a banner notification 1101 is less than the vertical height of the first window.

Specifically, the electronic device may set positions and an arrangement manner of the elements in the banner notification, to display the elements such as the content of the banner notification, the icon and the name of the application program that issues the banner notification, and the topic of the notification in a same line, thereby displaying the banner notification in the single-line form in the full-screen mode.

Further, the notification handling method may further include the following step:
303. The electronic device displays detailed information about the banner notification in the first window in response to detection of a preset touch operation of the user on the banner notification in the single-line form.

The detailed information may include all information of the content of the banner notification, and the detailed information further includes at least one of the icon of the application program that generates the banner notification, the name of the application program, the time at which the banner notification is generated, or the topic of the banner notification.

When the user finds, based on the content of the banner notification in the single-line form, that the user is more interested in the banner notification or the banner notification is more important, the user may perform the touch operation on the banner notification in the single-line form, so that the electronic device displays the detailed information about the banner notification, and the user can further learn of more detailed information about the banner notification. Specifically, the electronic device may display the detailed information about the banner notification in the first window in the floating manner, or the electronic device may display a second window, where the second window may include the detailed information about the banner notification.

In some embodiments, the banner notification in the single-line form may further include a first control, and the touch operation of the user on the banner notification in the single-line form is the preset touch operation, for example, the preset touch operation may be a tap operation on the first control on the banner notification in the single-line form. To be specific, when the electronic device detects the tap operation of the user on the first control on the banner notification in the single-line form, the electronic device may display the detailed information about the banner notification in the first window.

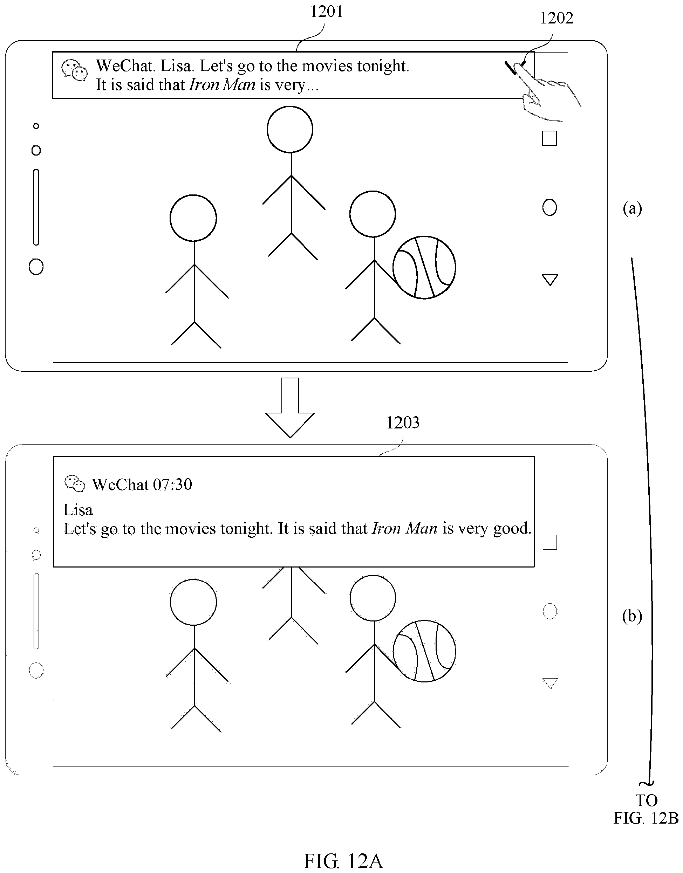

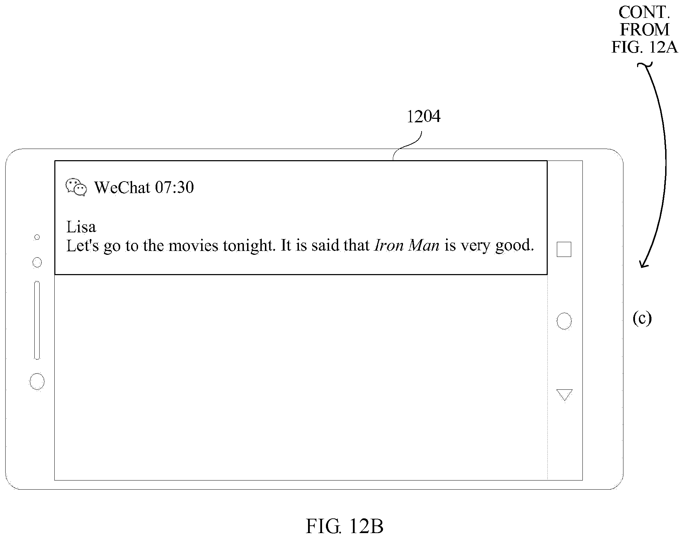

For example, as shown in (a) in FIG. 12A and FIG. 12B, a banner notification 1201 in the single-line form that is displayed in the first window in the floating manner includes an arrow control 1202 (namely, the first control). When the user taps the arrow control 1202, as shown in (b) in FIG. 12A and FIG. 12B, the electronic device displays detailed information 1203 about the banner notification in the first window in the floating manner. Alternatively, as shown in (c) in FIG. 12A and FIG. 12B, the electronic device displays detailed information 1204 about the banner notification on the second window. The detailed information 1203 and the detailed information 1204 include all of information of content of the banner notification, an icon of an application program that generates the banner notification, a name of the application program, a time at which the banner notification is generated, and a topic of the banner notification.

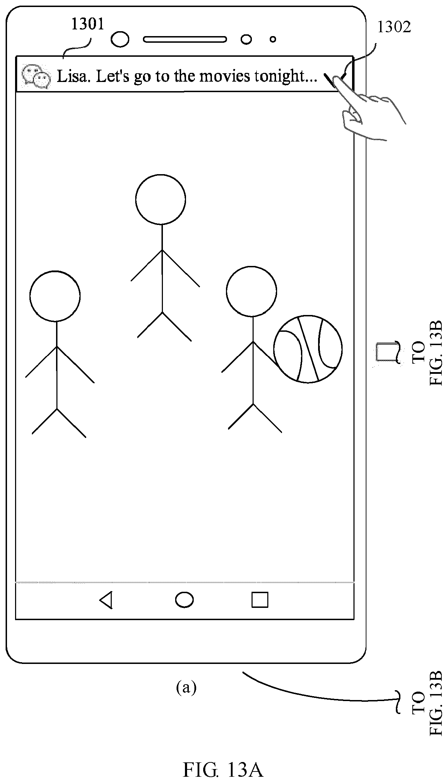

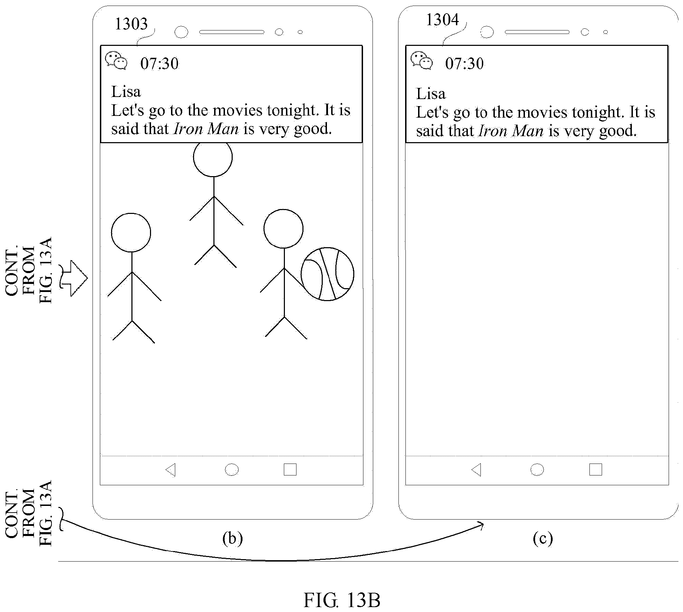

For another example, as shown in (a) in FIG. 13A and FIG. 13B, a banner notification 1301 in the single-line form that is displayed in the first window in the floating manner includes an arrow control 1302. When the user taps the arrow control 1302, as shown in (b) in FIG. 13A and FIG. 13B, the electronic device displays detailed information 1303 about the banner notification in the first window in the floating manner. Alternatively, as shown in (c) in FIG. 13A and FIG. 13B, the electronic device displays detailed information 1304 about the banner notification on the second window. The detailed information 1303 and the detailed information 1304 include all of information of content of the banner notification, an icon of an application program that generates the banner notification, a time at which the banner notification is generated, and a topic of the banner notification.

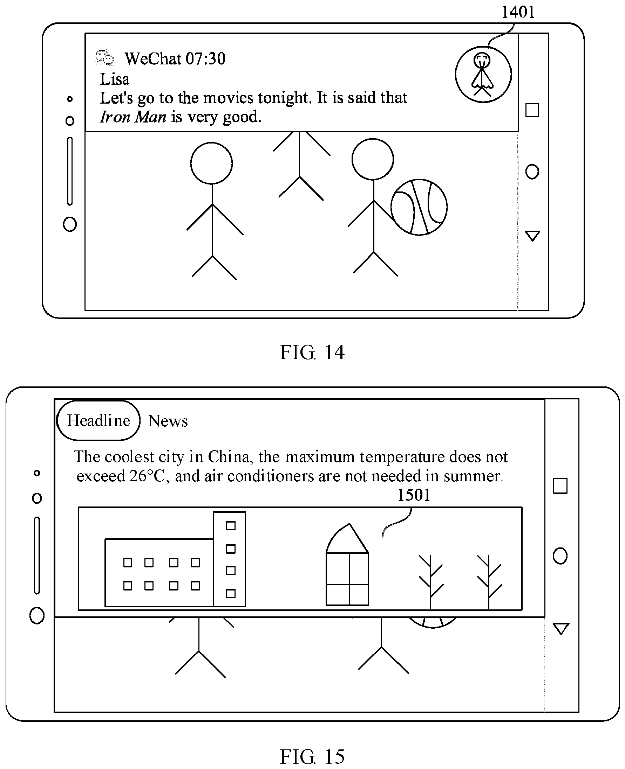

In some other embodiments, when the banner notification is a notification of an instant message, the detailed information about the banner notification may further include information such as an avatar of a contact that sends the instant message. For example, referring to FIG. 14, the detailed information about the banner notification includes an avatar 1401 of the contact that sends the instant message.

In addition, in some other embodiments, notification content in the detailed information may further include image information.

For example, referring to FIG. 15, the banner notification is a news message, and the detailed information of the banner notification includes image information 1501 of the notification content.

In some other embodiments, the preset touch operation of the user on the banner notification in the single-line form may be an operation of sliding downward the single-line banner notification. To be specific, when the electronic device detects the operation of sliding downward the banner notification in the single-line form that is performed by the user, the electronic device may display the detailed information about the banner notification in the first window.

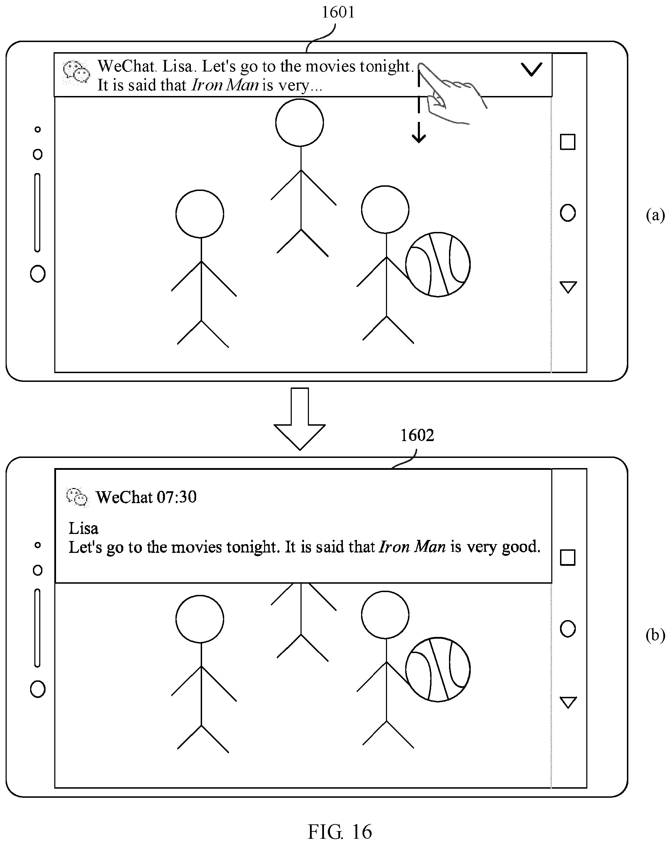

For example, referring to (a) in FIG. 16, when the electronic device detects an operation of sliding downward a single-line banner notification 1601 that is performed by the user, as shown in (b) in FIG. 16, the electronic device may display detailed information 1602 about the banner notification in the first window.

In some other embodiments, the displaying, by the electronic device, detailed information about the banner notification in the first window in response to detection of a touch operation of the user on the banner notification in the single-line form may specifically include: displaying, by the electronic device, the detailed information about the banner notification and an operation option in the first window in response to detection of the touch operation of the user on the banner notification in the single-line form, where the operation option is used for performing an operation on the banner notification.

For example, the operation option includes one or more of reply, call, delete, ignore (or clear), download, or play. In addition, for different types of banner notifications, operation options may also be different.

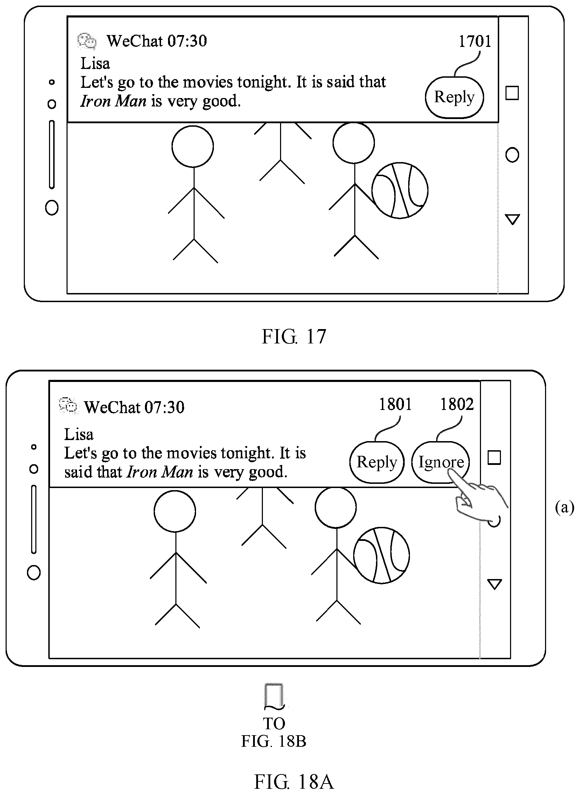

For example, referring to FIG. 17, the banner notification is a WeChat message, and the operation option may be a reply option 1701. When the user taps the reply option, a contact that sends the WeChat message may be replied to with a WeChat message.

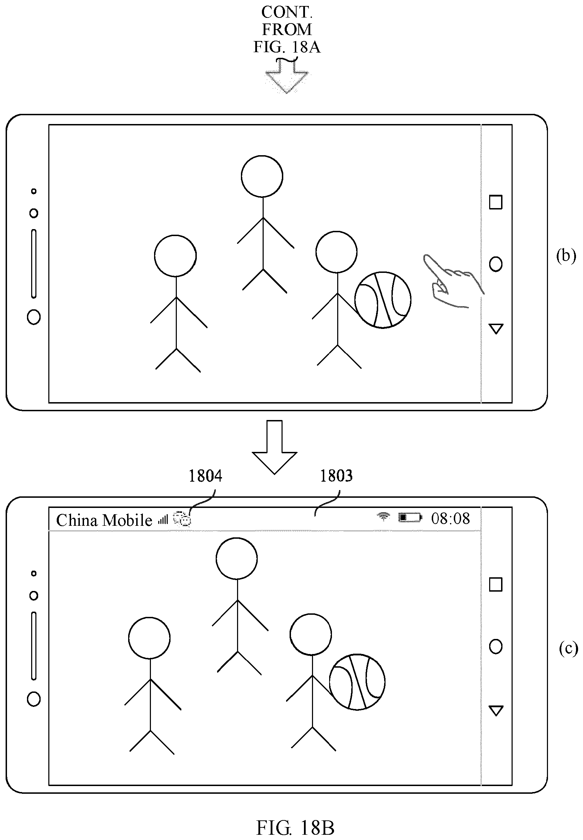

For another example, referring to (a) in FIG. 18A and FIG. 18B, the operation option may include a reply option 1801 and an ignore (or clear) option 1802. When the user taps the ignore (or clear) option 1802, referring to (b) in FIG. 18A and FIG. 18B, the electronic device may stop floating display of the banner notification in the first window. In some embodiments, referring to (c) in FIG. 18A and FIG. 18B, the electronic device may display a status bar 1803 in response to an operation of the user for displaying a status bar (for example, a touch operation of the user in the first window). The status bar 1803 includes an application icon 1804 of the banner notification. To be specific, when the user taps the ignore option, the electronic device may retract the banner notification to the status bar. In some other embodiments, when the user taps the ignore option, the electronic device may retract the banner notification to a notification panel. In response to an operation of the user for displaying the notification panel, the electronic device may display the notification panel, and the notification panel includes the content of the banner notification.

In some other embodiments, when the user taps the ignore option, the electronic device may retract the banner notification to an application window of the application program that generates the banner notification. In response to an operation of the user for displaying the application window of the application program, the electronic device displays the application window, and the application window includes the content of the banner notification.

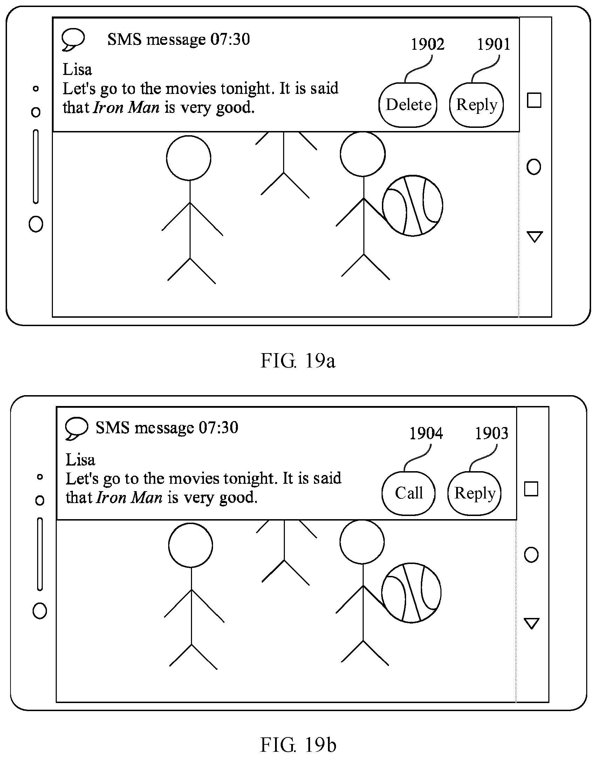

For another example, referring to FIG. 19a, the banner notification is an SMS message, and the operation options may include a reply option 1901 and a delete option 1902. When the user taps the delete option 1902, the electronic device may delete the banner notification.

For another example, referring to FIG. 19b, the banner notification is an SMS message, and the operation option may include a reply option 1903 and a call option 1904. When the user taps the reply option 1903, the electronic device may reply, with an SMS message, to a contact that sends the SMS message. When the user taps the call option 1904, the electronic device may call the contact that sends the SMS message.

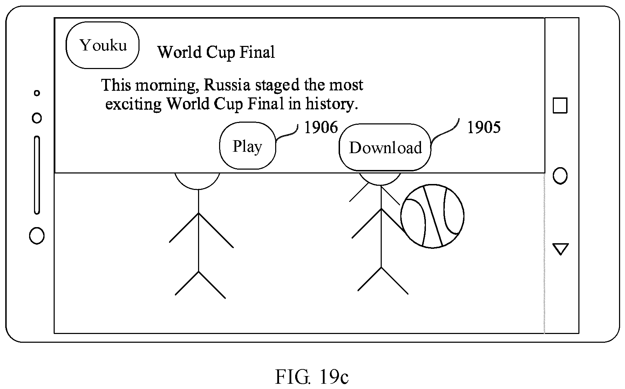

For another example, referring to FIG. 19c, the banner notification is a video notification pushed by a video player (for example, Youku), and the operation option may include a download option 1905 and a play option 1906. When the user taps the download option 1905, the electronic device may download the pushed video; and when the user taps the play option 1906, the electronic device may play the pushed video.

It should be noted that the operation options listed above are merely examples for description, and the operation options in the banner notification may further include other options, which are not described one by one herein.

The electronic device can display the detailed information about the banner notification within the preset duration, so that the user views the information of the notification or performs an operation within the preset duration, and when display duration of the detailed information is longer than or equal to the preset duration, the electronic device can stop display of the detailed information, to restore display of the first window in full screen, thereby avoiding continuous visual interference of the notification to the user.

In some other embodiments, the electronic device displays, in response to detection of a tap operation of the user on an area used for displaying the icon of the application program, the name of the application program, the time information, or the topic or a blank area in the banner notification in the single-line form, an application window of the application program that generates the banner notification. In other words, when the electronic device displays the banner notification in the single-line form, the user can very conveniently enter the application window of the application program that generates the banner notification, to perform operations such as viewing and replying.

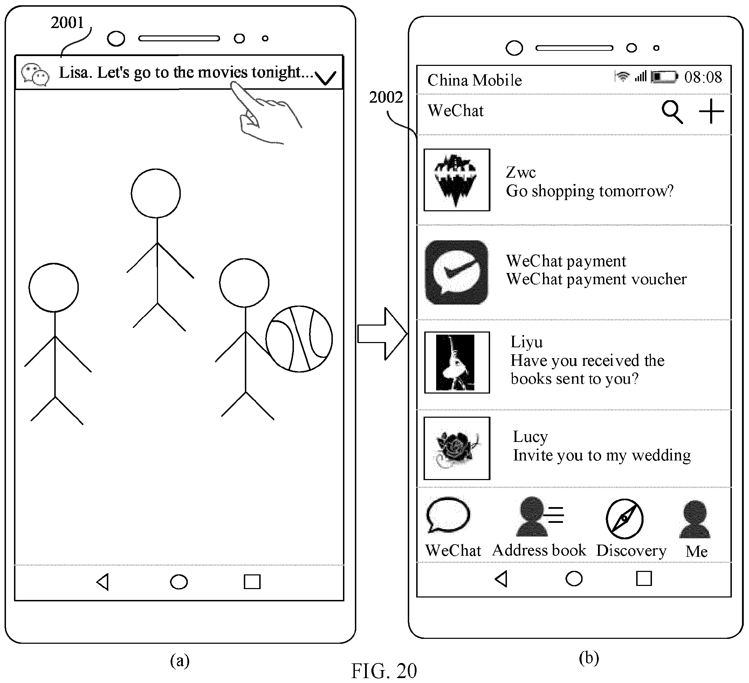

For example, in response to detection of a tap operation of the user on a WeChat message notification 2001 in the single-line form in (a) in FIG. 20, as shown in (b) in FIG. 20, the electronic device may display a WeChat application window 2002.

In some other embodiments, the electronic device deletes the banner notification in the single-line form in response to detection of an operation of sliding the banner notification in the single-line form to the left or the right that is performed by the user. In this way, when the electronic device displays the banner notification in the single-line form, the user can very conveniently delete the banner notification.

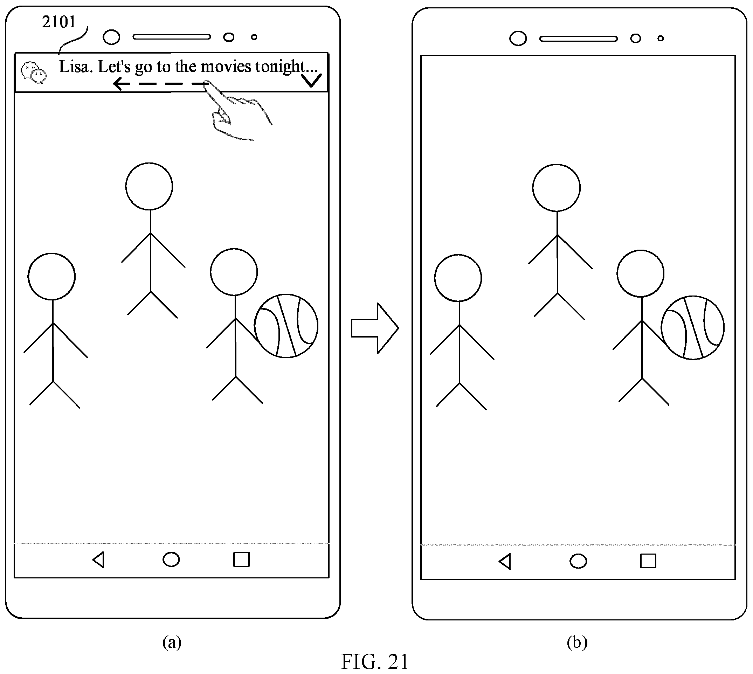

For example, in response to detection of an operation of sliding a WeChat message notification 2101 in the single-line form that is shown in (a) in FIG. 21 to the left that is performed by the user, as shown in (b) in FIG. 21, the electronic device may delete the WeChat message notification 2101 in the single-line form.

In some other embodiments, the electronic device stops, in response to detection of an operation of sliding upward the banner notification in the single-line form that is performed by the user, floating display of the banner notification in the first window, and the electronic device displays a status bar in response to an operation of the user for displaying the status bar, where the status bar includes an application icon in the banner notification. In other words, the electronic device may retract the banner notification to the status bar in response to detection of an operation of sliding upward the banner notification in the single-line form that is performed by the user.

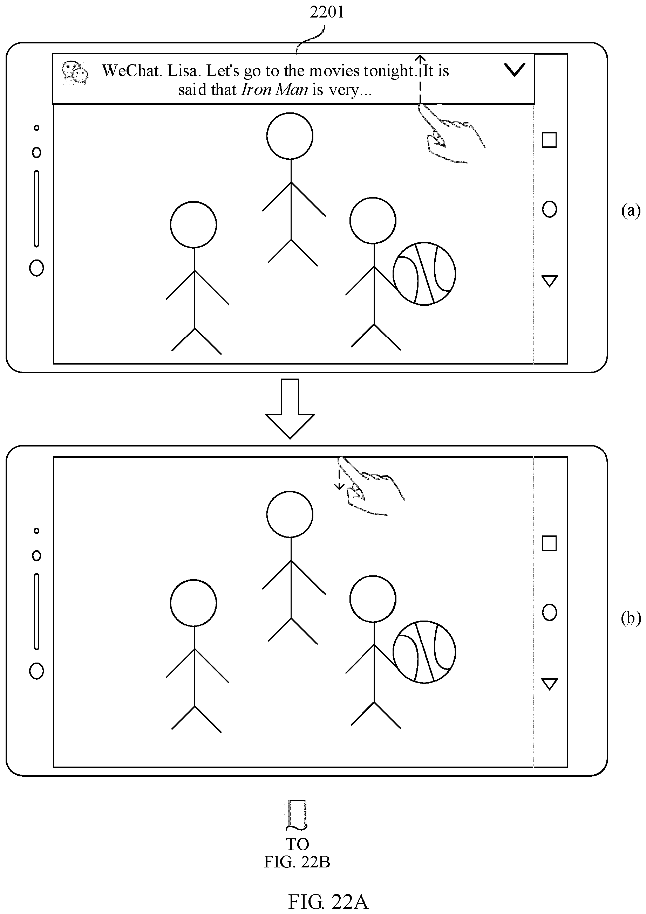

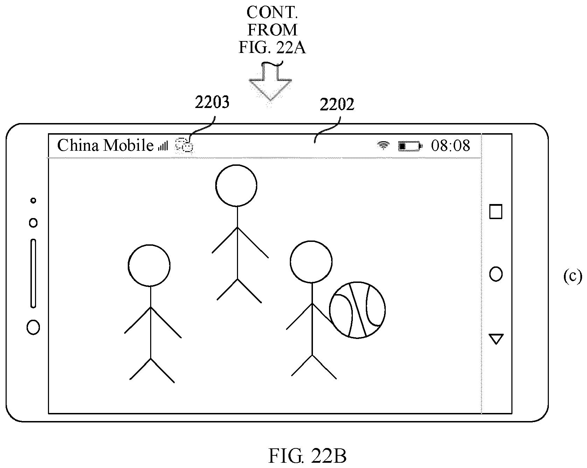

For example, in response to detection of an operation of sliding upward a WeChat message notification 2201 in the single-line form that is shown in (a) in FIG 22A and FIG. 22B that is performed by the user, as shown in (b) in FIG. 22A and FIG 22B, the electronic device may stop display of the WeChat message notification 2201 in the first window, and display the first window in full screen. Referring to (c) in FIG 22A and FIG. 22B, the electronic device displays a status bar 2202 in response to an operation of sliding downward that is performed by the user at the top of the first window, where the status bar includes a WeChat icon 2203.

In some other embodiments, the electronic device displays a notification panel in response to an operation of sliding downward the detailed information that is performed by the user, where the notification panel includes the banner notification. In other words, the electronic device may switch the content of the banner notification to the notification panel in response to the operation of sliding downward the detailed information that is performed by the user, so that the user can conveniently view the content of the banner notification in the notification panel.

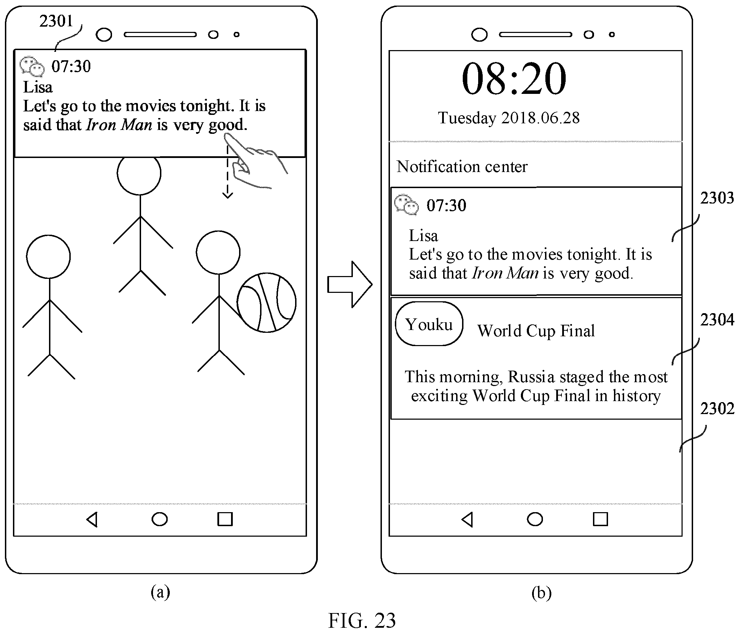

For example, in response to detection of an operation of sliding downward detailed information 2301 of a WeChat message notification shown in (a) in FIG. 23 that is performed by the user, as shown in (b) in FIG. 23, the electronic device displays a notification panel 2302, where the notification panel 2302 includes information 2303 in the WeChat message notification and another notification 2304. Specific content of the information 2303 in the WeChat message notification may be the same as the detailed information 2301 or different from the detailed information 2301.

In some other embodiments, the electronic device can display the banner notification in the single-line form within the preset duration, so that the user views the information of the notification or performs an operation within the preset duration, and when display duration of the banner notification in the single-line form is longer than or equal to the preset duration, the electronic device can stop display of the banner notification in the single-line form in the first window, to restore display of the first window in full screen, thereby avoiding continuous visual interference of the notification to the user.

The banner notification is used as an example for description above. For a notification in another form, another simple style may alternatively be used for display, to reduce an area occupied by the notification and reduce the visual interference to the user.

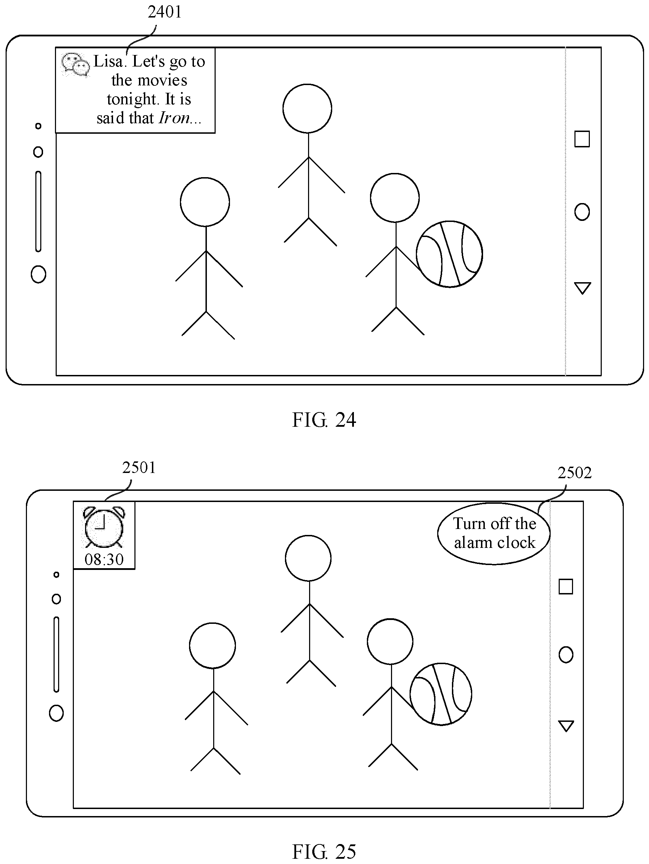

For example, in the full-screen mode, a width and a height of the notification displayed by the electronic device are both preset values and are relatively small, that is, the notification occupies a relatively small area. Such a style may be used for a notification in a centralized form. Content of the notification in the centralized form may be the same as the content of the foregoing notification in the single-line form, and information displayed in the notification in the centralized form may include a plurality of lines. Specifically, the notification in the centralized form may be located at a position in an upper left corner, a lower left corner, an upper right corner, or a lower right corner of the first window. Because a corner area of the interface is usually not a main area or an important area for displaying the content, when the notification is located at any one of the four corners of the first window, visual impact caused by the notification to the user can be minimized. For example, for a notification 2401 located at the upper left corner of the first window and having a preset size, refer to FIG. 24.

For another example, in the full-screen mode, the notification displayed by the electronic device includes a plurality of scattered small areas, each small area is used to display one or more elements in the notification, and a same element is displayed in one small area as much as possible. Such a simple style may be used for a notification in a decentralized form. Specifically, the content of the notification in the centralized form may be the same as the content of the foregoing notification in the single-line form, and information displayed in the notification in the centralized form may include a plurality of lines. Each small area for display in the notification in the decentralized form may be located at a position in an upper left corner, a lower left corner, an upper right corner, or a lower right corner of the first window. In this way, the content of the notification can be split and displayed in a small area at a position in the corner of the interface, thereby minimizing visual impact caused to the user.

For example, referring to FIG. 25, the notification displayed by the electronic device is an alarm clock notification, including a first portion 2501 in the upper left corner and a second portion 2502 in the upper right corner. The first portion 2501 includes an alarm clock icon and a specified time, and the second portion 2502 includes a control for turning off an alarm clock.

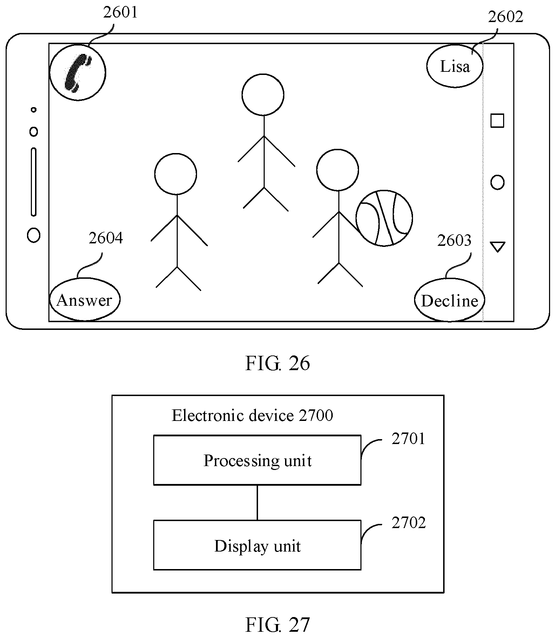

For another example, referring to FIG. 26, the notification displayed by the electronic device is an incoming call notification, including a first portion 2601 located in the upper left corner, a second portion 2602 located in the lower left corner, and a third portion 2603 located in the lower right corner. The first portion 2601 includes a phone icon, the second portion 2602 includes incoming call contact information, the third portion 2603 includes a control for declining an incoming call, and a fourth portion 2604 includes a control for answering the incoming call.

It may be understood that, to implement the foregoing functions, the electronic device includes corresponding hardware and/or software modules for performing the functions. The algorithm steps in the examples described with reference to the embodiments disclosed in this specification can be implemented in a form of hardware or a combination of hardware and computer software in this application. Whether a function is performed by hardware or hardware driven by computer software depends on particular applications and design constraint conditions of the technical solutions. A person skilled in the art may use different methods to implement the described functions for each particular application with reference to the embodiments, but it should not be considered that the implementation goes beyond the scope of this application.

In this embodiment, function modules of the electronic device may be obtained through division according to the foregoing method examples. For example, the function modules may be obtained through division corresponding to various functions, or two or more functions may be integrated into one processing module. The integrated module may be implemented in a form of hardware. It should be noted that, in this embodiment, module division is an example, and is merely a logical function division. In actual implementation, another division manner may be used.

When the function modules are obtained through division corresponding to various functions, FIG. 27 is a possible schematic composition diagram of an electronic device 2700 in the foregoing embodiment. As shown in FIG. 27, the electronic device 2700 may include a processing unit 2701 and a display unit 2702.

The processing unit 2701 may be configured to support the electronic device 2700 in instructing the display unit 2702 to display the first window in step 301, instructing the display unit 2702 to display the banner notification in step 302, and instructing the display unit to display the detailed information about the banner notification in step 303.

The display unit 2702 may be configured to support the electronic device 2700 in displaying the first window in step 301, displaying the banner notification in step 302, and displaying the detailed information about the banner notification in step 303 according to the instruction of the processing unit 2701.

In addition, the processing unit 2701 may be further configured to instruct the display unit 2702 to display the notification panel, the status bar, and/or another process used for the technology described in this specification.

The display unit 2702 may be further configured to display, according to the instruction of the processing unit 2701, the notification panel, the status bar, or the like, and/or another process used for the technology described in this specification.

In some embodiments, the display unit 2702 may be a same display unit or different display units. This is not limited in this application.

It should be noted that all related content of the steps in the foregoing method embodiments can be cited in function descriptions of corresponding function modules, and details are not described herein again.

The electronic device 2700 provided in this embodiment is configured to perform the foregoing notification handling method, and therefore, a same effect as the foregoing implementation can be achieved.

When an integrated unit is used, the electronic device 2700 may include a processing module, a storage module, and a communications module. The processing module may be configured to control and manage an action of the electronic device 2700, for example, may be configured to support the electronic device 2700 in performing steps performed by the processing unit 2701 and the display unit 2702.

The storage module may be configured to support the electronic device 2700 in storing content of a notification, and storing program code, data, and the like.

The communications module may be configured to support the electronic device 2700 in communicating with another device.

The processing module may be a processor or a controller. The processor or the controller may implement or execute various example logical blocks, modules, and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor, or the like. The storage module may be a memory. The communications module may be specifically a radio frequency circuit, a Bluetooth chip, a Wi-Fi chip, or another device that interacts with another electronic device.

In an embodiment, when the processing module is a processor, and the storage module is a memory, the electronic device in this embodiment may be an electronic device having the structure shown in FIG. 2A and FIG. 2B.

An embodiment of this application further provides a computer storage medium. The computer storage medium stores a computer instruction. When the computer instruction is run on an electronic device, the electronic device is enabled to perform the foregoing related method steps, to implement the notification handling method in the foregoing embodiment.

An embodiment of this application further provides a computer program product. When the computer program product is run on a computer, the computer is enabled to perform the foregoing related steps, to implement the notification handling method in the foregoing embodiment.

In addition, an embodiment of this application further provides an apparatus. The apparatus may be specifically a chip, a component, or a module. The apparatus may include a processor and a memory that are connected. The memory is configured to store a computer executable instruction. When the apparatus is run, the processor may execute the computer executable instruction stored in the memory, so that the chip performs the notification handling method in the foregoing method embodiments.

In addition, an embodiment of this application further provides an apparatus. The apparatus may be specifically a chip, a component, or a module. The apparatus may include a processor and a memory that are connected. The memory is configured to store a computer executable instruction. When the apparatus is run, the processor may execute the computer executable instruction stored in the memory, so that the chip performs the notification handling method in the foregoing method embodiments.

The electronic device, the computer storage medium, the computer program product, or the chip provided in the embodiments is configured to perform a corresponding method provided above. Therefore, for beneficial effects that can be achieved by the electronic device, the computer storage medium, the computer program product, or the chip, refer to beneficial effects of the corresponding method provided above. Details are not described herein again.

The foregoing descriptions about the implementations allow a person skilled in the art to understand that, for the purpose of convenient and brief description, only division of the foregoing function modules is used as an example for description. In actual application, the foregoing functions can be allocated to different function modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A notification handling method, comprising:
displaying (301) a first window;
determining, by an electronic device, whether the first window is in a full-screen mode; wherein in the full-screen mode, the user may call a navigation bar and a status bar through a sliding operation; and if detecting a to-be-displayed banner notification when the first window is in the full-screen mode, displaying (301) the banner notification in a single-line form on the first window in a floating manner, wherein the banner notification in the single-line form is located at the top or the bottom of the first window, and the banner notification in the single-line form comprises some or all information of content of the notification, and further comprises at least one of an icon of an application program that generates the banner notification, a name of the application program, a time at which the banner notification is generated, or a topic of the banner notification; and
displaying (303) detailed information about the banner notification on a first window in response to detection of a preset touch operation of a user on the banner notification in the single-line form, wherein the detailed information comprises all information of the content of the banner notification, and further comprises at least one of the icon of the application program that generates the banner notification, the name of the application program, the time at which the banner notification is generated, or the topic of the banner notification;
wherein the method further comprises:
when display duration of the banner notification in the single-line form is longer than or equal to preset duration, stopping display of the banner notification in the single-line form in the first window.

2. The notification handling method according to claim 1, wherein the first window occupies an entire display screen;
the size of first window is equal to a size of the display screen.

3. The notification handling method according to claim 1, wherein the method further comprises:
in response to detection of an operation of sliding upward the banner notification in the single-line form that is performed by the user, stopping floating display of the banner notification in the first window; and
displaying a status bar in response to an operation of the user for displaying the status bar, wherein the status bar comprises an application icon in the banner notification;
displaying a notification panel in response to an operation of sliding downward the detailed information that is performed by the user, wherein the notification panel comprises the banner notification.

4. The notification handling method according to claim 1, wherein the banner notification is a notification of an instant message; and the banner notification in the single-line form comprises some or all information of the content of the notification, the icon of the application program that generates the banner notification, the name of the application program, and the topic of the banner notification;
the detailed information comprises all information of the content of the banner notification, the icon of the application program that generates the banner notification, the name of the application program, the time at which the banner notification is generated, and the topic of the banner notification; and
the topic of the banner notification is a contact that sends the instant message.

5. The notification handling method according to claim 1, wherein the displaying detailed information about the banner notification on a first window in response to detection of a preset touch operation of a user on the banner notification in the single-line form comprises:
displaying the detailed information about the banner notification and an operation option on the first window in response to detection of the preset touch operation of the user on the banner notification in the single-line form, wherein the operation option is used for performing an operation on the banner notification.

6. The notification handling method according to claim 5, wherein the operation option comprises at least one of reply, call, delete, ignore, download, or play.

7. The notification handling method according to claim 5 or 6, wherein the banner notification in the single-line form further comprises a first control, and the preset touch operation of the user on the banner notification in the single-line form is a tap operation on the first control on the banner notification in the single-line form, or an operation of sliding downward the banner notification in the single-line form.

8. The notification handling method according to any one of claims 1 to 7, wherein the method further comprises:
in response to detection of a tap operation of the user on an area used for displaying the icon of the application program, the name of the application program, the time information, or the topic or a blank area in the banner notification in the single-line form, displaying an application window of the application program that generates the banner notification.

9. The notification handling method according to any one of claims 1 to 8, wherein the method further comprises:
deleting the banner notification in the single-line form in response to detection of an operation of sliding the banner notification in the single-line form to the left or the right that is performed by the user.

10. An electronic device, comprising a touchscreen, a memory, one or more processors, a plurality of application programs, and one or more programs, wherein the one or more programs are stored in the memory, and when the one or more processors execute the one or more programs, the electronic device is enabled to implement the notification handling method according to any one of claims 1 to 9.

11. A computer program product comprising an instruction, wherein when the computer program product is run on an electronic device, the electronic device is enabled to implement the notification handling method according to any one of claims 1 to 9.

12. A computer-readable storage medium, comprising an instruction, wherein when the instruction is run on an electronic device, the electronic device is enabled to implement the notification handling method according to any one of claims 1 to 9.

## Patentansprüche

1. Verfahren zur Handhabung von Mitteilungen, Folgendes umfassend:
Anzeigen (301) eines ersten Fensters;
Bestimmen, ob sich das erste Fenster in einem Vollbildmodus befindet, durch eine elektronische Vorrichtung; wobei in dem Vollbildmodus der Benutzer eine Navigationsleiste und eine Statusleiste durch einen Schiebevorgang aufrufen kann; und, wenn eine anzuzeigende Bannermitteilung erfasst wird, wenn sich das erste Fenster in dem Vollbildmodus befindet, Anzeigen (301) der Bannermitteilung in einer einzeiligen Form auf dem ersten Fenster in einer gleitenden Weise, wobei die Bannermitteilung in der einzeiligen Form an der Oberseite oder der Unterseite des ersten Fensters angeordnet ist, und die Bannermitteilung in der einzeiligen Form einige oder alle Informationen des Inhalts der Mitteilung umfasst, und ferner mindestens eines von einem Symbol eines Anwendungsprogramms, das die Bannermitteilung erzeugt, einen Namen des Anwendungsprogramms, eine Zeit, zu der die Bannermitteilung erzeugt wird, oder ein Thema der Bannermitteilung umfasst; und
Anzeigen (303) von detaillierten Informationen über die Bannermitteilung auf einem ersten Fenster als Reaktion auf die Erfassung eines voreingestellten Berührungsvorgangs eines Benutzers auf der Bannermitteilung in der einzeiligen Form, wobei die detaillierten Informationen alle Informationen über den Inhalt der Bannermitteilung umfassen und ferner mindestens eines von dem Symbol des Anwendungsprogramms, das die Bannermitteilung erzeugt, dem Namen des Anwendungsprogramms, der Zeit, zu der die Bannermitteilung erzeugt wird, oder dem Thema der Bannermitteilung umfassen;
wobei das Verfahren ferner Folgendes umfasst:
wenn die Anzeigedauer der Bannermitteilung in der einzeiligen Form länger als oder gleich der voreingestellten Dauer ist, Stoppen der Anzeige der Bannermitteilung in der einzeiligen Form in dem ersten Fenster.

2. Verfahren zur Handhabung von Mitteilungen gemäß Anspruch 1, wobei das erste Fenster einen ganzen Bildschirm einnimmt;
die Größe des ersten Fensters gleich der Größe des Bildschirms ist.

3. Verfahren zur Handhabung von Mitteilungen gemäß Anspruch 1, wobei das Verfahren ferner Folgendes umfasst: als Reaktion auf die Erfassung eines Vorgangs des Hochschiebens der Bannermitteilung in der einzeiligen Form, der von dem Benutzer durchgeführt wird, Stoppen der gleitenden Anzeige der Bannermitteilung in dem ersten Fenster; und
Anzeigen einer Statusleiste als Reaktion auf einen Vorgang des Benutzers zum Anzeigen der Statusleiste, wobei die Statusleiste ein Anwendungssymbol in der Bannermitteilung umfasst;
Anzeigen eines Mitteilungsfeldes als Reaktion auf einen Vorgang des Herunterschiebens der detaillierten Informationen, der von dem Benutzer durchgeführt wird, wobei das Mitteilungsfeld die Bannermitteilung umfasst.

4. Verfahren zur Handhabung von Mitteilungen gemäß Anspruch 1, wobei die Bannermitteilung eine Mitteilung einer Sofortnachricht ist; und die Bannermitteilung in der einzeiligen Form einige oder alle Informationen über den Inhalt der Mitteilung, das Symbol des Anwendungsprogramms, das die Bannermitteilung erzeugt, den Namen des Anwendungsprogramms und das Thema der Bannermitteilung umfasst;
die Detailinformationen alle Informationen über den Inhalt der Bannermitteilung, das Symbol des Anwendungsprogramms, das die Bannermitteilung erzeugt, den Namen des Anwendungsprogramms, die Zeit, zu der die Bannermitteilung erzeugt wird, und das Thema der Bannermitteilung umfassen; und
das Thema der Bannermitteilung ein Kontakt ist, der die Sofortnachricht sendet.

5. Verfahren zur Handhabung von Mitteilungen gemäß Anspruch 1, wobei das Anzeigen von detaillierten Informationen über die Bannermitteilung auf einem ersten Fenster als Reaktion auf die Erfassung eines voreingestellten Berührungsvorgangs eines Benutzers auf der Bannermitteilung in der einzeiligen Form Folgendes umfasst:
Anzeigen der detaillierten Informationen über die Bannermitteilung und einer Bedienungsoption auf dem ersten Fenster als Reaktion auf die Erfassung des voreingestellten Berührungsvorgangs des Benutzers auf der Bannermitteilung in der einzeiligen Form, wobei die Bedienungsoption zum Durchführen eines Vorgangs auf der Bannermitteilung verwendet wird.

6. Verfahren zur Handhabung von Mitteilungen gemäß Anspruch 5, wobei die Betriebsoption mindestens eines von Antworten, Anrufen, Löschen, Ignorieren, Herunterladen oder Abspielen umfasst.

7. Verfahren zur Handhabung von Mitteilungen gemäß Anspruch 5 oder 6, wobei die Bannermitteilung in der einzeiligen Form ferner ein erstes Steuerelement umfasst, und der voreingestellte Berührungsvorgang des Benutzers auf der Bannermitteilung in der einzeiligen Form ein Tippvorgang auf dem ersten Steuerelement auf der Bannermitteilung in der einzeiligen Form oder ein Vorgang des Herunterschiebens der Bannermitteilung in der einzeiligen Form ist.

8. Verfahren zur Handhabung von Mitteilungen gemäß einem der Ansprüche 1 bis 7, wobei das Verfahren ferner Folgendes umfasst:
als Reaktion auf die Erfassung eines Tippvorgangs des Benutzers auf einen Bereich, der zum Anzeigen des Symbols des Anwendungsprogramms, des Namens des Anwendungsprogramms, der Zeitinformationen oder des Themas oder eines leeren Bereichs in der Bannermitteilung in einzeiliger Form verwendet wird, Anzeigen eines Anwendungsfensters des Anwendungsprogramms, das die Bannermitteilung erzeugt.

9. Verfahren zur Handhabung von Mitteilungen gemäß einem der Ansprüche 1 bis 8, wobei das Verfahren ferner Folgendes umfasst: Löschen der Bannermitteilung in der einzeiligen Form als Reaktion auf die Erfassung eines Vorgangs des Verschiebens der Bannermitteilung in der einzeiligen Form nach links oder rechts, der von dem Benutzer durchgeführt wird.

10. Elektronische Vorrichtung, die einen Touchscreen, einen Speicher, einen oder mehrere Prozessoren, eine Vielzahl von Anwendungsprogrammen und ein oder mehrere Programme umfasst, wobei das eine oder die mehreren Programme in dem Speicher gespeichert sind und die elektronische Vorrichtung, wenn der eine oder die mehreren Prozessoren das eine oder die mehreren Programme ausführen, in die Lage versetzt wird, das Verfahren zur Handhabung von Mitteilungen gemäß einem der Ansprüche 1 bis 9 durchzuführen.

11. Computerprogrammprodukt, das einen Anweisung umfasst, wobei, wenn das Computerprogrammprodukt auf einer elektronischen Vorrichtung ausgeführt wird, die elektronische Vorrichtung in die Lage versetzt wird, das Verfahren zur Handhabung von Mitteilungen gemäß einem der Ansprüche 1 bis 9 zu implementieren.

12. Computerlesbares Speichermedium, das eine Anweisung umfasst, wobei, wenn die Anweisung auf einer elektronischen Vorrichtung ausgeführt wird, die elektronische Vorrichtung in die Lage versetzt wird, das Verfahren zur Handhabung von Mitteilungen gemäß einem der Ansprüche 1 bis 9 zu implementieren.

## Revendications

1. Procédé de gestion de notification, comprenant :
l'affichage (301) d'une première fenêtre ;
le fait de déterminer, par un dispositif électronique, si la première fenêtre est en mode plein écran ; dans lequel dans le mode plein écran, l'utilisateur peut appeler une barre de navigation et une barre d'état à travers une opération coulissante ; et en cas de détection d'une bannière de notification à afficher lorsque la première fenêtre est en mode plein écran, l'affichage (301) de la bannière de notification sous une forme d'une seule ligne sur la première fenêtre de manière flottante, dans lequel la bannière de notification sous la forme d'une seule ligne est située en haut ou en bas de la première fenêtre, et la bannière de notification sous la forme d'une seule ligne comprend tout ou partie des informations de contenu de la notification, et comprend également au moins l'un parmi une icône d'un programme d'application qui génère la bannière de notification, un nom du programme d'application, une heure à laquelle la bannière de notification est générée ou un sujet de la bannière de notification ; et
l'affichage (303) d'informations détaillées concernant la bannière de notification sur une première fenêtre en réponse à la détection d'une opération tactile prédéfinie d'un utilisateur sur la bannière de notification sous la forme d'une seule ligne, dans lequel les informations détaillées comprennent toutes les informations du contenu de la bannière de notification, et comprennent également au moins l'un parmi l'icône du programme d'application qui génère la bannière de notification, le nom du programme d'application, l'heure à laquelle la bannière de notification est générée ou le sujet de la bannière de notification ;
dans lequel le procédé comprend également :
lorsque la durée d'affichage de la bannière de notification sous la forme d'une seule ligne est supérieure ou égale à la durée prédéfinie, l'arrêt de l'affichage de la bannière de notification sous la forme d'une seule ligne dans la première fenêtre.

2. Procédé de gestion de notification selon la revendication 1, dans lequel la première fenêtre occupe tout un écran d'affichage ;
la taille de la première fenêtre est égale à la taille de l'écran d'affichage.

3. Procédé de gestion de notification selon la revendication 1, dans lequel le procédé comprend également : en réponse à la détection d'une opération de coulissement vers le haut de la bannière de notification sous la forme d'une seule ligne qui est exécutée par l'utilisateur, l'arrêt de l'affichage flottant de la bannière de notification dans la première fenêtre ; et
l'affichage d'une barre d'état en réponse à une opération de l'utilisateur pour afficher la barre d'état, dans lequel la barre d'état comprend une icône d'application dans la bannière de notification ;
l'affichage d'un panneau de notification en réponse à une opération de coulissement vers le bas d'informations détaillées qui est exécutée par l'utilisateur, dans lequel le panneau de notification comprend la bannière de notification.

4. Procédé de gestion de notification selon la revendication 1, dans lequel la bannière de notification est une notification d'un message instantané ; et la bannière de notification sous la forme d'une seule ligne comprend tout ou partie des informations du contenu de la notification, l'icône du programme d'application qui génère la bannière de notification, le nom du programme d'application et le sujet de la bannière de notification ;
les informations détaillées comprennent toutes les informations du contenu de la bannière de notification, l'icône du programme d'application qui génère la bannière de notification, le nom du programme d'application, l'heure à laquelle la bannière de notification est générée et le sujet de la bannière de notification ; et
le sujet de la bannière de notification est un contact qui envoie le message instantané.

5. Procédé de gestion de notification selon la revendication 1, dans lequel l'affichage d'informations détaillées concernant la bannière de notification sur une première fenêtre en réponse à la détection d'une opération tactile prédéfinie d'un utilisateur sur la bannière de notification sous la forme d'une seule ligne comprend :
l'affichage des informations détaillées concernant la bannière de notification et une option d'opération sur la première fenêtre en réponse à la détection de l'opération tactile prédéfinie de l'utilisateur sur la bannière de notification sous la forme d'une seule ligne, dans lequel l'option d'opération est utilisée pour exécuter une opération sur la bannière de notification.

6. Procédé de gestion de notification selon la revendication 5, dans lequel l'option d'opération comprend au moins l'un parmi une réponse, un appel, une suppression, une abstraction, un téléchargement ou une lecture.

7. Procédé de gestion de notification selon la revendication 5 ou 6, dans lequel la bannière de notification sous forme d'une seule ligne comprend également une première commande, et l'opération tactile prédéfinie de l'utilisateur sur la bannière de notification sous la forme d'une seule ligne est une opération de tapotement sur la première commande sur la bannière de notification sous la forme d'une seule ligne, ou une opération de coulissement vers le bas de la bannière de notification sous la forme d'une seule ligne.

8. Procédé de gestion de notification selon l'une quelconque des revendications 1 à 7, dans lequel le procédé comprend également :
en réponse à la détection d'une opération de tapotement de l'utilisateur sur une zone utilisée pour afficher l'icône du programme d'application, le nom du programme d'application, les informations temporelles ou le sujet ou une zone vide dans la bannière de notification sous la forme d'une seule ligne, affichant une fenêtre d'application du programme d'application qui génère la bannière de notification.

9. Procédé de gestion de notification selon l'une quelconque des revendications 1 à 8, dans lequel le procédé comprend également :
la suppression de la bannière de notification sous la forme d'une seule ligne en réponse à la détection d'une opération de coulissement de la bannière de notification sous la forme d'une seule ligne vers la gauche ou vers la droite qui est exécutée par l'utilisateur.

10. Dispositif électronique, comprenant un écran tactile, une mémoire, un ou plusieurs processeurs, une pluralité de programmes d'application et un ou plusieurs programmes, dans lequel les un ou plusieurs programmes sont stockés dans la mémoire, et lorsque les un ou plusieurs processeurs exécutent les un ou plusieurs programmes, le dispositif électronique est activé pour mettre en oeuvre le procédé de gestion de notification selon l'une quelconque des revendications 1 à 9.

11. Produit de programme informatique comprenant une instruction, dans lequel lorsque le produit de programme informatique est exécuté sur un dispositif électronique, le dispositif électronique est activé pour mettre en oeuvre le procédé de gestion de notification selon l'une quelconque des revendications 1 à 9.

12. Support de stockage lisible par ordinateur, comprenant une instruction, dans lequel lorsque l'instruction est exécutée sur un dispositif électronique, le dispositif électronique est activé pour mettre en oeuvre le procédé de gestion de notification selon l'une quelconque des revendications 1 à 9.
